(19) Europäisches Patentamt
European Patent Office
Office européen des brevets

(11) **EP 1 574 095 B1**

(12) **EUROPEAN PATENT SPECIFICATION**

(45) Date of publication and mention
of the grant of the patent:
**11.10.2006 Bulletin 2006/41**

(51) Int Cl.:
***H04Q 7/36*** (2006.01)

(21) Application number: **02798352.7**

(22) Date of filing: **19.12.2002**

(86) International application number:
**PCT/EP2002/014602**

(87) International publication number:
**WO 2004/057893 (08.07.2004 Gazette 2004/28)**

(54) **ASSIGNING TIME SLOTS DURING TRANSMISSION GAPS OF A FIRST PROTOCOL COMMUNICATION TO A SECOND PROTOCOL COMMUNICATION**

ZUWEISUNG VON ZEITSCHLITZEN WÄHREND DER SENDEPAUSEN EINER KOMMUNIKATION NACH EINEM ERSTEN PROTOKOLL ZU EINER KOMMUNIKATION NACH EINEM ZWEITEN PROTOKOLL

ATTRIBUTIONS D'INTERVALLES TEMPORELS PENDANT DES INTERRUPTIONS DE TRANSMISSION D'UNE PREMIERE COMMUNICATION PAR PROTOCOLE A UNE SECONDE COMMUNICATION PAR PROTOCOLE

(84) Designated Contracting States:
**AT BE BG CH CY CZ DE DK EE ES FI FR GB GR IE IT LI LU MC NL PT SE SI SK TR**

(43) Date of publication of application:
**14.09.2005 Bulletin 2005/37**

(73) Proprietor: **TELEFONAKTIEBOLAGET LM ERICSSON (publ)**
**164 83 Stockholm (SE)**

(72) Inventors:
• **HILDEBRAND, Uwe**
**91058 Erlangen (DE)**
• **JECK, Michael**
**55122 Mainz (DE)**

(74) Representative: **Kühn, Friedrich Heinrich**
**Ericsson AB**
**Patent Unit Radio Networks**
**Torshamnsgatan 23**
**164 80 Stockholm (SE)**

(56) References cited:
**EP-A- 0 865 172**     **WO-A-01/71946**
**US-A- 5 732 076**     **US-A- 5 878 035**

• **3GPP: "3rd Generation Partnership Project; Technical Specification Group Radio Access Network; Multiplexing and channel coding (FDD) (Release 1999)" , 3GPP TS 25.212 V3.5.0, XX, XX, PAGE(S) 1-62 XP002229241 chapter 4.4**

**Description**

**FIELD OF THE INVENTION**

The present invention relates, in general, to an operation of a communications environment wherein communications resources provided for a first communications standard are utilized for communications according to a second communications standard. In particular, the present invention particularly relates an operation of different communications environments in a common frequency range and, in particular, to TDMA based communications such as used in a GSM/GPRS communications environment in a W-CDMA based communications environment like UMTS. Further, the present invention relates to allocating frequencies used for communications according to a first communications standard of a communications environment for communications according to a second communications standard of the same communications environment like an UMTS communications environment.

**BACKGROUND OF THE INVENTION**

The increasing amount of communications in communications environments often lead to problems with respect to an efficient use of transmission capacities and transmission rates.

Within the framework of the introduction of UMTS communications environments, new frequency spectra have been allocated for so-called 3G (third generation) mobile communication systems (for example the W-CDMA based UMTS Terrestrial Radio Access Network UTRAN). In particular, the new frequency spectra have been allocated such that frequency spectra already allocated for 2G (second generation) communications environments, such as GSM networks, are not cooperatively used and affected. As a result, specific frequencies are associated to each communications environment possibly leading to transmission capacity problems in a communications environment in case the allocated frequencies are not sufficient.

In order not to restrict a communications environment to specific frequencies, frequencies can be commonly used by different communications environments. For example, in the United States of America it can be expected that 3G communications environments will share the same frequency spectrum with 2G communications environments, such as the 1.900 MHz PCS frequency bands. Further, in Europe it is discussed that a frequency spectrum presently used for 2G communications environments, namely the 1.800 MHz frequency band, could be also allocated to 3G communications environments. These issues will become more relevant when 3G communications environments will successively replace 2G communications environments.

Similar problems will arise during initial phases for the introduction of 3G communications environments where transmission capacity demands will be low such that the respective frequency spectrum can be used for different communications purposes.

For example, it might be possible that in an initial phase a frequency spectrum allocated to a 3G communications environment is desired to be used for transmissions in a 2G communications environment.

An approach is to operate 2G and 3G communications environments in co-existence, i. e. both communications environments are allowed to use the same frequency spectrum or frequency band at the same time. As a result, significant radio interferences between both communications environments will occur. Further, sharing of common frequency resources exhibiting radio signal interferences requires at least a complex power control for both the 2G and 3G communications environments.

Moreover, an adaptation of the frequency planning of at least one of the communications environments will be necessary due to the different standards defined for example with respect to the allocation of physical channels and mapping of transport channels onto physical channels.

Further, different communications environments provide for enhanced transmission rates, mostly for specific communications purposes, such as the so-called High Speed PacketDownlink Access (HSDPA) in an UMTS communications environment. Here, specific frequencies are reserved for such high-speed communications which possibly leads to a sub-optimal transmission rates e. g. if large amounts of data are to be communicated in a short period of time.

One example of cooperatively used communications environments is found in U.S.-A-5732076. In order to reduce interference between the different environments, this document suggests a composite time frame including a first portion of time slots allocated to a first communication protocol and a second portion of time slots allocated to a second communication protocol. An integrated base station has two units which each operates according to a different one of the communication protocols. The composite time frame is programmed into the integrated base station so that it knows in advance a relative position of time slots allocated for the different protocols. Each base station unit independently manages the time slots allocated to it, and is independently responsible for establishing and maintaining communications with user stations using a particular protocol.

Another example is found in EP-A-0865172. An indoor CDMA network is operated within a coverage area of an outdoor CDMA network. In order to reduce interference, the document suggests a synchronization procedure for a mobile station. The mobile station detects a phase or a spreading code of an interfering signal from the outdoor network. The mobile station further detects a phase or a spreading code of a signal from the indoor network. Based on these detections, the mobile station calculates a phase error or a spreading code shift and adjusts a timing of transmitted signals in order to reduce the phase error or the spreading code shift.

SUMMARY OF THE INVENTION

An object of the present invention is to provide for solutions to overcome the above named problems concerning transmission capacities and transmission rates.

In particular the present invention should allow communications within different communications environments or in a single communications environment which are based on different standards in a common frequency range, preferably avoiding the above named problem of radio signal interferences and drawbacks resulting there from. In greater detail, the present invention should allow communications of a TDMA based communications environment (e.g. GSM/ GPRS communications environment) to be accomplished in the same frequency range used by a W-CDMA based communications environment (e. g. UMTS) and communications based on FDD in a communications environment to be performed in the same frequency range used for communications based on TDD in the same communications environment.

According to one aspect of the invention, the above-stated object is achieved with a method according to claim 1.

According to another aspect of the invention, the above-stated object is achieved with a communications environment according to claim 14.

According to yet another aspect of the invention, the above-stated object is achieved with a user equipment according to claim 22.

According to a further aspect of the invention, the above stated object is achieved with radio base station according to claim 24.

According to yet a further aspect of the invention, the above-stated object is achieved with a computer program product according to claim 26.

SHORT DESCRIPTION OF SOME EMBODIMENTS

Preferred embodiments, which illustrate the present invention in a more vivid manner, are shortly described in the following.

The expression "communications environment" will refer to environments which provide for communications by means of communications systems, communications networks, communications units, communications devices and the like as well as to methods used therein for communications. The expression "communications standard" will refer to standards, specifications, definitions and the like according to which communications is performed in a communications environment.

According to a preferred embodiment in view of a first aspect of the present invention, the method for operating the first communications environment is also for operating a second communications environment. Here, the first communications standard is defined for communications in the first communications environment, while the second communications standard is defined for communications in the second communications environment. Then it might be necessary to operate the second communications environment such that its communications are at least partially performed in the first communications environment in line with the first communications standard.

Communications in the first and second communications environment can be performed in a common frequency range, which is an example for a communications resource. The term "frequency range" as used herein also refers to single frequencies, frequency bands, multiple separated frequencies, multiple separated frequency band etc.

For communicating in the first communications environment, a first frame structure is transmitted in the common frequency range, wherein the first frame structure includes at least one transmission gap, i.e. a portion or duration with no transmissions for communications in the first communications environment. Communicating in the second communications environment is performed by transmitting a second frame structure in the common frequency range, wherein at least a part of the second frame structure is transmitted during the at least one transmission gap.

The expression "frame structure" will refer, in general, to a predefined arrangement (e.g. frame sequences, frame assignment for content data, control data etc. transmissions, etc.) of frames predefined for a communications environment. For example, the expression "frame structure" will refer to multiframes defined for frames used in GSM/ (E)GPRS and UMTS communications environments (TDMA and W-CDMA frames). The expression "superiorframe" refers to frame structures which utilize frames predefined for a communications environment but in a different arrangement (e.g. idle, data and control frames is a different sequence). Thus, with respect to multiframes defined for frames used in GSM/(E)GPRS and UMTS communications environments, a superiorframe will refer to modified/varied multiframes using respective frames of these communications environments. Further, superiorframes for the first and second communications environments can be defined in relation to each other. For example, a superiorframe for the first frame structure and a superiorframe for the second frame structure can have the same duration. In this case, it is possible that one or both superiorframes can include more than one of the respective frame structure.

In this manner, communications in the first and second communications environment are possible such that transmission interferences are avoided. Further, this allows communicating the second frame structure or at least a part thereof even if a single transmission gap would not be sufficient for a transmission. For example, the second frame structure or a part thereof can be transmitted during two, three or more transmission gaps.

Preferably, for communicating in the first communications environment, a plurality of subsequent ones of first frames is transmitted, at least one of the first frames including a transmission gap. Here, for communicating in the second communications environment, the second frame structure or at least a part of the second frame structure is transmitted during at least one transmission gap of subsequently transmitted first frames.

Comparable thereto, communications in the second communications environment can be based on a transmission of subsequent second frames.

Superiorframes defined in relation to each other can also be based on the first and second frames. For example, a superiorframe for the first frame structure and a superiorframe for the second frame structure can be defined such that both the number of first frames and the number of the second frames forming a respective superiorframe are integers.

In one embodiment of the present invention, the first frame structure comprises W-CDMA frames, preferably a predefined number thereof, while the second frame structure is formed by TDMA frames, also preferably a predefined number thereof.

Further, it is possible to base the first frame of a number of first slots wherein the at least one transmission gap is defined on slot basis by a first predefined number of first slots.

Comparable thereto, it is possible that the second frame includes a number of second slots.

Further, it is contemplated that the at least one transmission gap includes slots of only one of the first frames or that the at least one transmission gap includes slots of two consecutive ones of first frames. While the first alternative provides for transmission gaps within first frames, the second alternative provides for transmission gaps bridging two consecutive first frames. This can be compared to the so-called single-frame and double-frame methods defined for UMTS communications environments. For executing communications with respect to the second communications environment, it is possible that a second predefined number of second slots or a second predefined number of second frames employed for the second communication environment is transmitted during the at least one transmission gap.

In order to match the second frame structure or a part thereof to be transmitted during one or more transmission gaps to the first frame structure, the communicating in the first and second communications environments can be synchronized such that a frame timing for the first frame structure is synchronized with the frame timing for the second frame structure or vice versa. As a result, the first and second frame structures are synchronized in time for mapping to each other.

By defining the first frame structure such that the transmission gap has a predefined position therein and/or such that the transmission gap has a predefined length data, traffic control and scheduling demands for communicating in the first and second communications environments are reduced.

In case communicating in the second communications environment should be performed only on the basis of the second frame structure and/or the second frame structure or a part thereof can be actually transmitted, only the second frame structure or the part thereof being transmitted during the transmission gap is preferably used for communications in the second communications environment.

For the matching of the second frame structure to the first frame structure and, in particular, to transmission gaps it is possible to choose the time interval between consecutive ones of the transmission gaps such that it corresponds to the time interval between parts of the second frame structure to be transmitted.

For synchronizing purposes, it is contemplated to transmit timing information between the first and second communications environments.

In order to operate the second communications environment or at least components thereof such that communications thereof can be executed in the common frequency range, it is possible to transmit information to the second communications environment indicating that communications thereof will be performed in the common frequency range.

In a preferred embodiment, the first communications environment is an UMTS environment while the second communications environment is a GSM/GPRS environment.

According to a preferred embodiment in view of a second aspect of the present invention, the method is used for operating the first communications environment only. Here, both the first and the second communications standard are defined for the first communications environment.

Preferably, a first frequency range is defined for communications according to a first communications standard, while a second frequency range is defined for communications according to the second communications standard. Such definitions of frequencies allow for communications according to the first and second communications standard in separate frequency ranges if such communications are to be performed. On the other hand, if no communications are to be performed according to one of the communications standards at all or for certain time periods, the frequency range defined for that communication standard could be utilized - at least partially - for communications according to the other communications standard. In particular, this accomplished by allocating at least a part of the second frequency band for communications according to the first communication standard. As a result, the second frequency band originally intended for communications according to the first communications standard is at least partially available for communications according to the first communications standard. As a result, it is possible to perform at least parts of communications according to the first communications standard by employing the second frequency range or allocated parts thereof.

As an example, which applies inter alia for UMTS communications environments, communications according to the first communications standard are based on a frequency division multiplex (FDD) method and a respectively defined first communications standard. Comparable thereto, it is possible that communications according to the second communications standard employ a time division duplex (TDD) method and a respectively define second communication standard.

In view of communications according to the first communication standard on the basis of a frequency division duplex method, it is preferred to vary a duplex distance for frequency ranges or parts thereof of the first communications standard. Such a duplex distance variation can be obtained by means of allocating the second frequency range or parts thereof for communications according to the first communication standard. Further, it is preferred that the variation of the duplex distance is performed in view of uplink and downlink frequency ranges provided for communications according to the first communication standard.

According to a preferred embodiment, the first communications environment is W-CDMA based communications environment like an UMTS communications environment.

To achieve the above object, the present invention also teaches a communications environment wherein communications resources for communications according to a first communications standard are used for communications according to a second communications standard. Preferred embodiments which illustrate the present invention in a more vivid manner are described in the following.

According to another preferred embodiment in view of the first aspect of the present invention, the communications environment comprises first and second communications environments and a common frequency range for communications therein. The communications environment comprises at least one first communications unit for transmitting a first frame structure in the common frequency range. The first frame structure includes at least one transmission gap during which no transmissions occur with respect to the first communications environment. For communications in the second communications environment, at least one second communications unit thereof is provided which transmits a second frame structure in the common frequency range. In particular, the at least one communications unit for the second communications environment is adapted to transmit at least a part of the second frame structure during the at least one transmission gap.

Preferably the at least one first communications unit receives and/or transmits the first frame structure via the common frequency range. Comparable thereto it is possible that the at least one second communications unit receives and/or transmits the at least part of the second frame structure during the at least one transmission gap in the common frequency range.

For a synchronization of communications performed in the first and second communications environment, it is possible that a common timing unit is used for the at least one first and second communication units. As an alternative thereto, it is contemplated that the first timing unit is used for the at least one first communications unit, while a second timing unit will be employed for the at least one second communications unit. Here, the first and second timing units are synchronized to obtain synchronized communications in the first and second communications environments.

In a preferred embodiment, the at least one first and second communications unit, form a part of an integrated communications unit which services communication in both the first and the second communications environments.

With respect to the UMTS and GSM/GPRS communications environments, examples for the first and second communication units comprises radio network controllers and notes (UMTS) and base station controllers and base transceiver stations (GSM/GPRS).

Preferably, the communication environment in view of the first aspect of the present invention further comprises at least one first user equipment for communications in the first communications environment. Independently thereof, it is possible that at least one second user equipment is provided for communications in the second communications environment. The first user equipment can communicate mainly on the basis of the first frame structure. The second user equipment allows communications by means of the at least a part of the second frame structure which is transmitted (sent/received) during the at least one transmission gap. Further, it is possible that the second user equipment also allows for communications on the basis of the second frame structure within the first communications environment.

Preferred examples of the first and second communications environments include UMTS environments and GSM/GPRS environments, respectively.

According to another preferred embodiment in view of the second aspect of the present invention, the communications environment comprises the first communications environment only. Here, both the first and the second communications standards are defined for the first communications environment.

Preferably, this communications environment comprises at least one communications unit for communications according to the first and the second communications standard. Further, such a communications environment can comprise a first frequency range and a second frequency range for communications according to the first communications standard and the second communications standard, respectively. For allowing an utilization of the second frequency range or at least parts thereof for communications according to the first communications standard, the at least one communications unit comprises means or units to allocate the second frequency range or at least parts thereof to be available for first communications standard communications. To actually employ the allocated second frequency range or allocated parts thereof, the at least one communications unit is adapted to communicate in line with the first communications standard on the basis of communications executed via the allocated (parts of the) second frequency range.

A preferred example for the at least one communications unit is a communications unit being operated on the basis of a frequency division duplex (FDD) method for first communications standard communications and on the basis of time division duplex (TDD) methods for second communications standard communications.

In case of a frequency division duplex method for the first communications standard, it is possible that the at least one communications unit is adapted to vary a duplex distance between frequency ranges provided for the first communications standard. This can be accomplished by means of the allocation of the second frequency range or parts thereof as described above. Further, it is preferred, that the at least one communication unit varies the duplex distance with respect to uplink and downlink frequency ranges for the first communications standard.

Examples for such communications units include nodes, radio network controllers, mobile end user equipment and the like for and UMTS communications environment. In line therewith it is preferred that the first communications is an UMTS environment. Alternatively other W-CDMA based communications environments are contemplated.

Further, the present invention provides a user equipment, radio base stations and computer program products as defined in the claims.

## SHORT DESCRIPTION OF THE FIGURES

In the following description of preferred embodiments, it is referred to the enclosed drawings wherein:

Fig. 1 illustrates a frame structure for uplink communications in an UMTS communications environment,

Fig. 2 illustrates a frame structure for downlink communications in an UMTS communications environment,

Fig. 3 illustrates a multiframe structure for GPRS communications,

Fig. 4 illustrates a compressed mode transmission in an UMTS communications environment,

Fig. 5 illustrates W-CDMA frame structure for uplink compressed transmissions in an UMTS communications environment,

Fig. 6 illustrates W-CDMA frame structure types in downlink compressed transmissions in an UMTS communications environment,

Fig. 7 illustrates methods for transmission gap positioning in compressed mode transmissions in an UMTS communications environment,

Fig. 8 illustrates different transmission gap positions in compressed mode transmissions in an UMTS communications environment,

Fig. 9 illustrates a mapping of the TDMA frame structure shown in fig. 3 and W-CDMA frame structure shown in fig. 5 and 6,

Fig. 10 illustrates a modified TDMA frame structure usable for mapping to the W-CDMA frames structure shown in fig. 5 and 6,

Fig. 11 is a generalized illustration of mapping of a second frame structure of a second communications environment to a first frame structure of a first communications environment,

Fig. 12 illustrates single-mode TDMA and W-CDMA radio base stations according to the present invention,

Fig. 13    illustrates a dual-mode radio base station according to the present invention,

Fig. 14    illustrates a variable duplex distance for a FDD/TDD spectrum sharing according to the present invention,

Fig. 15    illustrates a conventional TDD frame structure,

Fig. 16    illustrates a TDD frame structure for TDD/FDD spectrum sharing according to the present invention, and

Fig. 17    is a generalized illustration of mapping of a second frame structure to a first frame structure of a common communications environment.

**Description of preferred embodiments**

The following description is given with respect to TDMA and W-CDMA communications environments. Examples for such communications environments include GSM/GPRS communications environments and UMTS communications environments. The principles and embodiments of the present invention given with respect to these specific communications environments also apply for other scenarios where different communications environments, i.e. communications environments according to different standards, or a different single communications environment share a same frequency spectrum or frequency band for its communications. In greater detail, the present invention will allow for a co-existence and integral cooperation of different communications environments and of different communications standards in single communications environment.

Referring to GSM/GPRS and UMTS communications environments, definitions, symbols and abbreviations will be used which are in a line with the specifications by the third generation partnership project 3GPP™.

GSM/GPRS communications via an UMTS communications environment

In the following embodiments, the first and second communications standards, namely UMTS and GSM/GPRS standards, are defined for different communications environment, namely an UMTS communications environment and a GSM/GPRS communications environment.

In order to reduce transmission times for radio signal transmissions in a 3G communications environment (e. g. UMTS) a so-called compressed mode has been defined by the third generation partnership project 3GPP. In the compressed mode which is applicable for both uplink and downlink communications so-called transmission gaps are introduced in frame structures during which no data are transmitted. That means that during some periods in a frame structure no usable data will be communicated between user equipment UE (such as a mobile telephone) and an associated radio base station (i. e. so-called nodes according to the UMTS specifications functionally corresponding to a base transceiver station BTS in a GSM communications environment). Usable data, as used in this context, refers to data which are usable by a user of a user equipment, such as voice messages, fax, e-mail, alphanumerical and/or graphical data, video and/or audio data and the like. Compressed mode operation is described, for example, in 3GPP TS 25.212 V3.5.0, wherein the transmission gaps are used for measurement purposes.

In principle, such transmissions gaps of one communications environment can be used for communications in another communications environment. For example, GSM/GPRS communications transmissions can be executed during transmissions gaps of an UMTS communications environment.

One of the basic ideas employed in the preferred embodiments is to utilize transmission gaps which occur in the compressed mode specified for UMTS to execute GSM/GPRS communications when UMTS and GSM/GPRS communications environments are operated in the same frequency range. As a result, the common frequency resources are shared between both communications environments by time multiplexing.

In an UMTS communications environment, comparable frame structures are used for uplink and downlink communications whereas different multiplex methods are used.

Downlink communications are performed on the basis of time multiplexing, while uplink communications employ I/Q multiplexing.

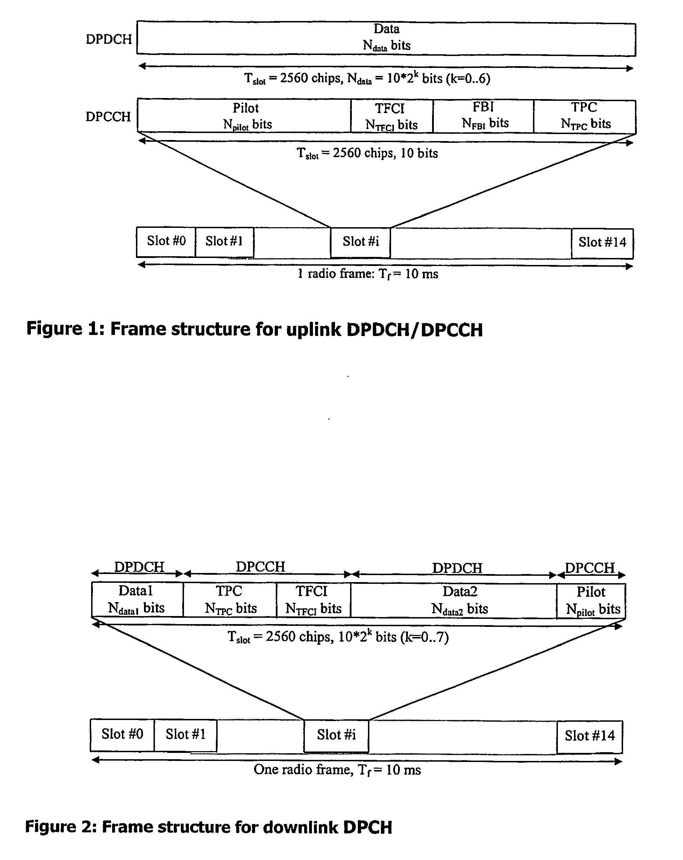

As illustrated in fig. 1, a frame used for uplink communications comprises several slots which are structured in dependence of data (e. g. speech or content data) and control signals. For data transmissions, slots of a frame for uplink communications comprises the upper structure shown in fig.1. Here, each slot comprises a plurality of data bits which are transmitted in a respective frame via a dedicated physical data channel DPDCH.

For control signal transmissions in uplink communications, the slots of a frame comprise the structure shown in the middle of fig. 1. Here, each slot comprises several pilot bits, a transport format combination indicator TFCI, feedback information FBI data and transmit power control TPC data. Frames comprising such slots are communicated via a dedicated physical control channel DPCCH. As a result, for such uplink communications in a UMTS communications environment DPDCH and DPCCH are I/Q multiplexed within each frame.

In contrast thereto, downlink communications in a UMTS communications environment for DPDCH and DPCCH are multiplexed in the time domain. Thus, downlink DPCH can be seen as time multiplex of uplink DPDCH and uplink DPCCH. As illustrated in fig. 2, a frame used in downlink communications comprises several slots having the structure shown in this figure. Each slot comprises first data (data 1), transmit power control TPC data, transport format combination indicator TFCI data, second data (data 2) and pilot data.

GPRS has been defined for GSM communications environment and uses a packet-mode technique to communicate packets of data (e.g. content data) by means of radio signals in the GSM communications environment, for example to/from a user equipment UE or mobile station MS. For GPRS, which has to be understood to include EGPRS (enhanced GPRS), new physical channels or logical channels are defined, wherein uplink and downlink channels are allocated separately. For communications by means of GPRS, i.e. transmissions of data packets, packet data channels PDCHs are used for uplink and downlink communications.

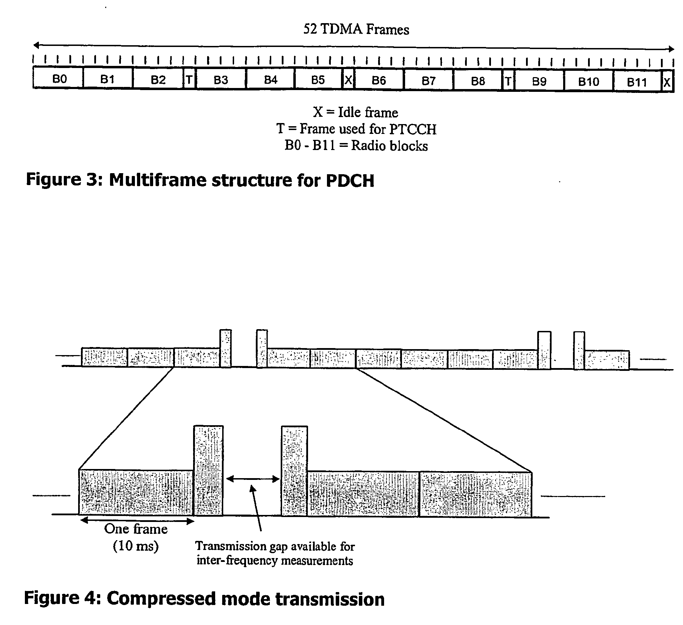

For mapping in time of the logical channels to a physical channel used for GPRS, a so-called packet data channel PDCH, a multiframe structure shown in fig. 3, is defined. The multiframe structure for a PDCH consists of 52 TDMA frames including 12 radio blocks B0, ..., B11 each thereof including 4 frames, 2 idle frames X and 2 frames T used for the so-called packet timing advance control channel PTCCH for timing control purposes. The length of the multiframe structure, i.e. of 52 TDMA frames, is 240 ms.

By means of respective physical channels it would be also possible to perform more or all communications in a manner comparable to GPRS by means of data packet transmissions. In principle, a mapping of packet data is also possible for any other channel used in a GSM communications environment, such as PBCCH, PCCCH, PACCH, PDTCH, CFCCH, CSCH, CPBCCH, CPCCCH, PACCH, CTSCCH and CTS which also use a multiframe structure of 52 TDMA frames. Further, mapping can be contemplated for other channels of a GSM communications environment which are based on different multiframe structures including 26 TDMA frames (e.g. TCH, FACCH) or 51 TDMA frames (e.g. BCCH, CCCH, SDCCH, PBCCH and PCCCH). Although such data packet based transmissions will require some modifications of transmission standards and specifications of today's GSM based communications environments, this is important to notice since the use of data packet transmissions will allow utilizing idle periods in one communications environment (e.g. transmission gaps TGs in an UMTS communications environment) for communications in another communications environment. As a result, employing a broader range of data packet based transmissions in a communications environment will allow for performing a higher amount of transmissions of that communications environment in another communications environment during its idle periods.

As illustrated in fig. 4 for UMTS communications environments a so-called compressed mode is defined wherein slots having a transmission gap length TGL are not used for transmissions of data. The term transmission gap length TGL defines the number of consecutive empty slots (i.e. slots without usable data) which can be obtained with a transmission time reduction method. UMTS employs W-CDMA frames each having a duration of 10 ms and including 15 slots each with a duration of 0.666 ms.

A number of 12 W-CDMA frames forms a W-CDMA frame structure having a duration of 120 ms. For an operation in the compressed mode, information (e.g. speech data, content data, control signals and the like) normally transmitted during a W-CDMA frame is compressed in time. The maximum idle length, i.e. the maximal transmission gap length TGL, is defined according to 3GPP™ specifications to be 7 slots or, as will be referred to in the following, "idle slots" per 10 ms frame. Thus, for a maximal duration of 4.666 ms per W-CDMA frame or 56 ms per W-CDMA frame structure no information is communicated in the compressed mode.

A transmission gap can be located within a W-CDMA frame such that at least on slot of that W-CDMA frame is arranged before and after the transmission gap. Thus, transmission gaps of consecutive W-CDMA frames will be separated by at least one slot. Further, a transmission gap can be located within two consecutive W-CDMA frames such that the respective two W-CDMA frames are bridged. Thus, no W-CDMA slot will be arranged between the parts of transmission gap of the two consecutive W-CDMA frames. In order to meet the maximal transmission gap length TGL of 7 slots per W-CDMA frame, here, in each of the W-CDMA frames bridged by a transmission gap, at least 8 slots must be used for data transmissions. These two methods are called single-frame method and double-frame method and will be described in greater detail below.

For the compressed mode, two options are defined for downlink communications, while only one compression mode is employed for uplink communications. Uplink communications according UMTS employ a slot structure as illustrated in fig. 1. The upper slot structure in fig. 1 designated by the term "data" forms consecutive uplink UMTS slots (two slots shown) which can be separated by transmission gaps TGs (one transmission gap TG shown) when operated for uplink compressed transmission. Normally, data slots are communicated via an associated physical channel such that for a compressed mode operation this physical channel is not used during transmission gaps between single data frames.

Associated to the respective slots for data, control slots are used which have the lower structure illustrated in fig. 1 . For uplink communications, each control slot comprises pilot data Pilot, a transmit format combination indicator TFCI, a final block indicator FBI and transmit power control TPC data. The control slots form consecutive uplink UMTS slots (two control slots shown) which can be separated by transmission gaps TGs (one transmission gap TG shown) for uplink compressed transmission. Comparable to data slots control slots are transmitted via an associated physical channel. As a result, during transmission gaps with respect to control slots this physical channel is not utilized.

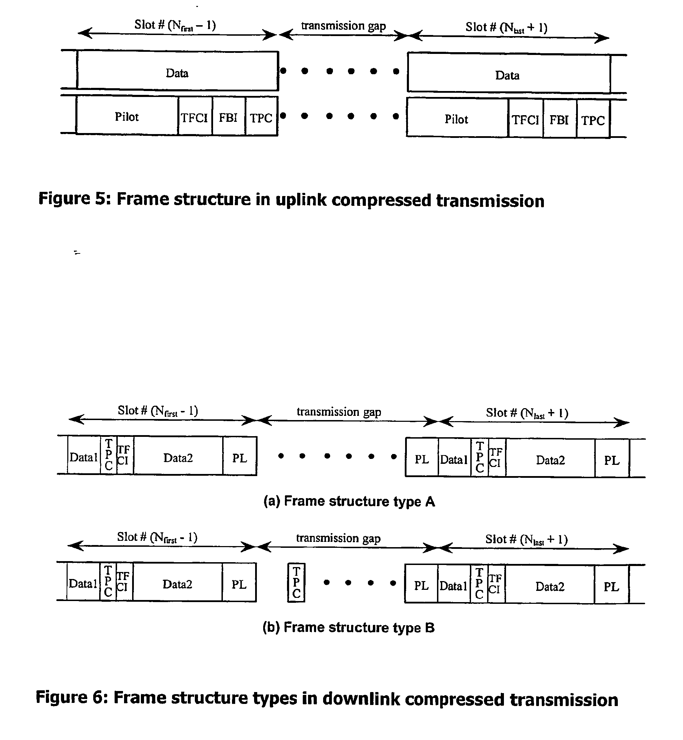

As can be derived from fig. 5, for uplink communications in the compressed mode transmission gaps are only arranged between two consecutive slots and its data and control slots, respectively.

UMTS downlink communications utilize a different frame structure compared to uplink communications, as shown in fig. 2. A frame structure type A (see fig. 6(a)) uses slots with data data 1 (e.g. speech data or content data), transmit power control TPC data, a transmit format combination indicator TFCI, further data data 2 (e.g. speech or content data) and pilot data PL. For downlink compressed transmissions consecutive slots are separated by a transmission gap TG wherein pilot data PL of the last slot in the transmission gap TG is transmitted while transmission is turned off during the rest of the transmission gap TG. As a result, the pilot data PL of the last slot of the transmission gap TG precedes the first data of the subsequently transmitted slot.

The frame structure type A maximizes the transmission gap length TGL, while the frame structure type B (shown in fig. 6(b)) is optimized for power control. The structure of slots for frame structure type B corresponds to the structure for slots of frame structure type A. Here, the transmit power control TPC data of a respective slot in the transmission gap TG and the pilot data PL of the last slot in the transmission gap TG are transmitted. For the remaining part of the transmission gap TG, transmission is turned off.

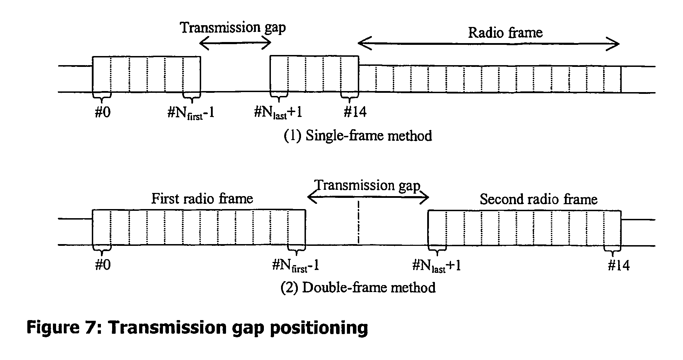

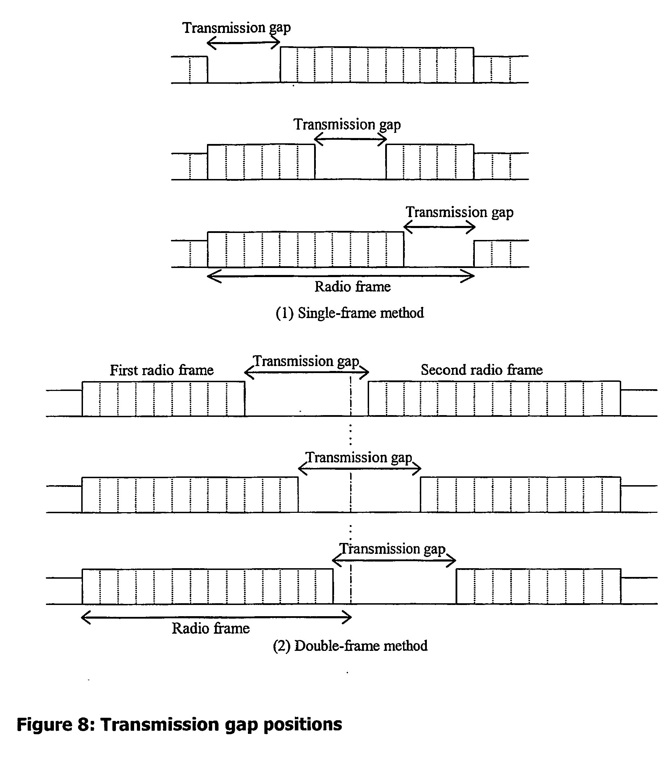

For the compressed mode different positions can be chosen for transmission gaps TGs as shown in fig. 7. According to the so-called single-frame method (see fig. 7(1)), a transmission gap TG is located within a W-CDMA frame, while according to the so-called double-frame method (shown in fig. 7(2)) a transmission gap TG is positioned between two consecutively transmitted W-CDMA frames. Illustrative examples for transmission gap positions for the single-frame method and the double-frame method are shown in fig. 8.

In view of the maximal transmission gap length of 7 idle slots per W-CDMA frame, this results in a maximal transmission gap length of 4.666 ms, here per W-CDMA frame, for the single-frame method. For the double-frame method this results in a maximal transmission gap length of 9.333 ms, here spanning two consecutive W-CDMA frames.

For using GSM/GPRS and UMTS communications environments in co-existence with both communications environments sharing the same frequency range, transmission gaps TGs existing for the compressed mode in UMTS are used for GSM/GPRS transmissions. This is possible since during transmission gaps TGs no transmissions are executed with respect to the UMTS communications environments and due to the fact that GSM/GPRS communications are performed on data packet basis. The transmission gaps provide for transmission resources available for GSM/GPRS communications, while data packet based communications allow for a transmission of single TDMA frames and/or slots without affecting data to be transmitted.

As illustrated in fig. 3, the multiframe structure defined for GSM/GPRS communications (see fig. 3) results in TDMA frame structure having a duration of 240 ms. This corresponds with the duration of two consecutive W-CDMA frame structures each having a length of 120 ms. Therefore, a mapping of TDMA frame structure to W-CDMA frame structure is chosen in a relation of 1:2, i.e. one TDMA frame structure will be mapped to two consecutive W-CDMA frame structures. Since not all slots of a W-CDMA frame will be idle slots and only W-CDMA slots of transmission gaps are used for transmissions of GSM/GPRS data, the mapping will be further performed on W-CDMA slot basis. That means that a TDMA frame structure (52 TDMA fames) is "synchronized" with respect to two W-CDMA frame structures and that single TDMA frames and/or single slots of a TDMA frame of the TDMA frame structure will be mapped to transmission gap slots of two W-CDMA frame structures.

The use of TDMA frames or slots of TDMA frames for mapping to transmission gaps depends, inter alia, from used transmission gap lengths, time periods between consecutive transmission gaps, data to be transmitted in the GSM/GPRS communications environment, properties of data packets employed in TDMA frame structures and the like. For example, during a transmission gap having a length of one W-CDMA slot (i.e. 0.666 ms), a TDMA slot (i.e. 0.576 ms) can be transmitted. As further examples, for a transmission gap length of 4.666 ms (single-frame method) a TDMA frame (i.e. 8 TDMA slots; 4.615 ms) can be transmitted, while for a transmission gap length of 9.333 ms (double-frame method) two TDMA frames (i.e. 16 TDMA slots; 9.231 ms) can be transmitted.

As an example, a communications environment is assumed which has a transmission gap length of 9.333 ms (double-frame method) and 8 W-CDMA slots used for data transmissions in each W-CDMA frame (i.e. 10.666 ms). Then, during 24 consecutive W-CDMA frames (360 W-CDMA slots = 240 ms) 12 transmission gaps each with a length of 9.333 ms can be realized at each second frame-frame border. Thus, 24 TDMA frames of a TDMA frame structure can be transmitted. This results in a transmission capacity for GSM/GPRS communications via an UMTS communications environment of about 46% compared with conventional GSM/GPRS communications.

As a further example, a communications environment is assumed which has a transmission gap length of 4.666 ms (single-frame method). Then, during 24 consecutive W-CDMA frames (360 W-CDMA slots = 240 ms) 24 transmission gaps each with a length of 4.666 ms can be realized in each frame. Again, 24 TDMA frames of a TDMA frame structure can be transmitted. This results in a transmission capacity for GSM/GPRS communications via an UMTS communications environment of about 46% compared with conventional GSM/GPRS communications.

For the preceding examples, the same transmission capacities for GSM/GPRS communications via an UMTS communications environment can be realized. It can be expected that the latter example will require more synchronization efforts to map each of the 24 TDMA frame to a transmission gap, in contrast to the previous example wherein 12 pairs of TDMA frames are mapped to 12 transmission gaps.

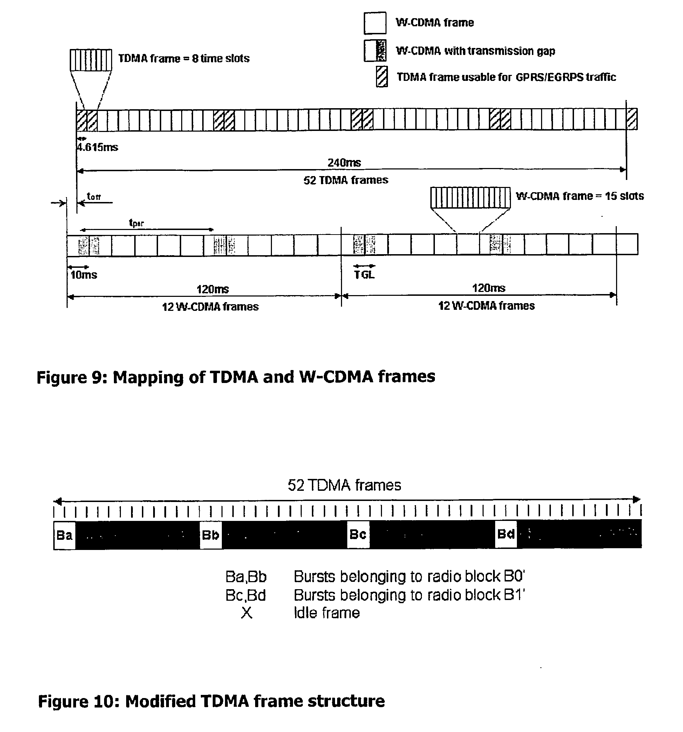

Mapping a TDMA frame structure for GSM/GPRS communications environments to transmission gaps of a W-CDMA frame structure for UMTS communications environments is illustrated in fig. 9.

As regards fig. 9, it is assumed that TDMA frames T used for PTCCH (see fig. 3) are not contemplated for transmission in an UMTS communications environment, while the "synchronization" of the TDMA and W-CDMA frame structures is performed such that TDMA idle frames X (see fig. 3) occur a time where no transmission gap is existing. Further, a transmission gap length of 9.333 ms (double-frame method) and a spacing of 6 W-CDMA frames between transmission gaps (i.e. 90 W-CDMA slots = 60 ms) are assumed. Such frame structures will also be referred to as 6-superiorframe as they rely on TDMA and W-CDMA frames for GSM/GPRS and UMTS communications, respectively, but are different compared to the "original" GSM/GPRS and UMTS frame structures as least with respect to the use of frames for communications.

Then, during 24 consecutive W-CDMA frames (360 W-CDMA slots = 240 ms) having 4 transmission gaps each with a length of 9.333 ms, 8 TDMA frames can be transmitted. This results in a transmission capacity for GSM/GPRS communications via an UMTS communications environment of 1/6 (approximately 17%) compared with conventional GSM/GPRS communications. For this calculation, it is assumed that TDMA frames T used for PTCCH (see fig. 3) are not contemplated for transmission in an UMTS communications environment, while the "synchronization" of the TDMA and W-CDMA frame structures is performed such that TDMA idle frames X (see fig. 3) occur a time where no transmission gap is existing.

The expression "synchronized" as used in this context refers to a transmission of TDMA frame structures in a fixed time relation to W-CDMA frame structures, which also includes a temporal offset between the beginning of a TDMA frame structure and the beginning of the first one of two W-CDMA frame structures associated thereto.

As indicated by arrow $t_{off}$ in fig. 9, a time offset between the GSM/GPRS and UMTS frame structures can be implemented. This will allow for an aligning of a first of the TDMA frames or slots with a first W-CDMA slot of a first of the transmission gaps TGs intended for GSM/GPRS transmissions. Further, as described above, transmission gap lengths TGLs and positions of transmission gaps TGs in the W-CDMA frame structure can be specified within certain limits which is indicated by arrow $t_{per}$ in fig. 9.

Comparable considerations have to be made if a GSM/GPRS frame structure including 26 TDMA frames is used. Here, a mapping in a relation of 1:1 can be chosen, i.e. one GSM/GPRS frame structure will be mapped to one W-CDMA frame structure.

For a GSM/GPRS frame structure including 51 TDMA frames it is possible to insert a delay of one TDMA frame between two consecutive frame structures including 51 TDMA frames to obtain a 1:2 relation with respect to the duration of transmission of TDMA frame structures and W-CDMA frame structures. Further, it is contemplated that a mapping of a frame structure including 51 TDMA frames to a W-CDMA frame structure is performed independently of the overall duration of the TDMA frame structure and the W-CDMA frame structure. Then, the mapping can be performed on W-CDMA slot basis only.

With respect to GSM/GPRS communications environments, this allows to use standard equipment (e.g. radio base stations, user equipment) and transmission standards (e.g. frame structures) specified for these communications environments. As will be set forth below, enhanced results can be obtained by employing modified GSM/GPRS equipment and transmission standards and/or modified UMTS equipment and transmission standards.

Instead of using the TDMA frame structure illustrated in Fig. 3, a new TDMA frame structure or TDMA superiorframe as illustrated in Fig. 10 can be used. This modified TDMA frame structure, i.e. a superiorframe, which also includes 52 TDMA frames is in particular suitable for the scenario illustrated in Fig. 9. The TDMA superiorframe structure shown in Fig. 10 provides 2 radio blocks useable for (E)GPRS communications. One of these radio blocks comprises two structures Ba and Bb (half a radio block) each including two bursts. Ba and Bb are separated by 11 TDMA frames which are not utilized for GSM/GPRS communications. The other of these radio blocks comprises structures Bc and Bd each thereof also including two bursts. As can be derived from Fig. 10, the separation by 11 idle TDMA frames applies to all of the structures Ba, Bb, Bc and Bd. Thus, Fig. 10 illustrates a 13-superiorframe.

Comparable to the scenario described with respect to Fig. 9, the TDMA superiorframe shown in Fig. 10 includes no TDMA frames for PTCCH. In line therewith corresponding packet data channels can only be used as "secondary channels" in order to increase the transmission capacity. That means, that packet data channels being communicated by means of TDMA superiorframe of Fig. 10 during transmission gaps of W-CDMA frames will be used in addition to a "standard" packet data channel which provides PTCCH and are linked thereto. In order to provide for further TDMA frames in the TDMA superiorframe shown in Fig. 10, for example PTCCH, an another or an additional transmission gap pattern can be configured.

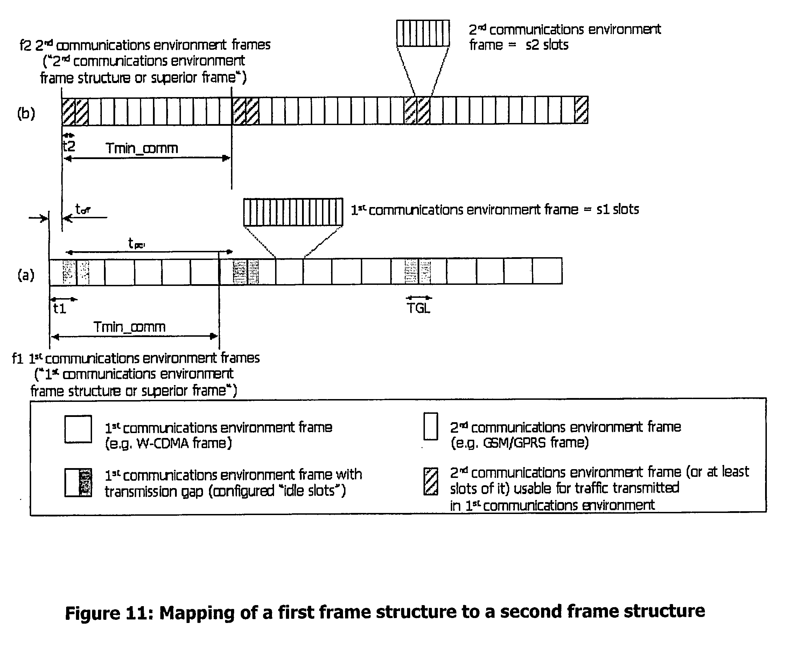

Fig. 11 illustrates, in a general manner, mapping of frame structures of a communications environment to frame structures of another communications environment. As illustrated, a first communications environment is used for transmissions of communication in a second communications environment. The first communication environment uses first frames each thereof consisting of a number of s1 slots. The second communications environment utilizes second frames each thereof comprising a number of s2 slots. As indicated in Fig. 11, a first frame has a duration of t1, while second frames have a duration of t2.

In the first communications environment, a number of f1 first frames forms a specific first frame structure referred to as f1-superiorframe with f1 being set to an actual value. In the second communications environment, a number f2 of second frames forms a specific second frame structure referred to as f2-superframe with f2 being set to an actual value. As set for the above, transmission gaps are defined such that for a period, also referred to as transmission gap length, no transmissions of communications to be performed in the first communications environment occur. Those transmissions gaps which are configured on slot basis can be used for transmissions of communications of the second communications environment.

As indicated by $t_{per}$ transmission gaps or idle periods in the first communications environment can be specified within limits determined, for example by a defined maximum transmission gap length and/or a defined minimum number of first frames or slots thereof to be used for transmissions.

To transmit second frames or at least slots thereof, the first and second communications environments are synchronized such that transmissions gaps in the first communications environment occur substantially at the same time second frames or slots thereof to be transmitted in the first communications environment occur or are available in the second communications environment. Such synchronization is generally recommended on frame structure or superiorframe basis. If, for example, a second frame structure or superiorframe is defined that match better to more than one second frame structure or superiorframe than to a single one thereof, synchronization can also be performed on the basis of multiples of frame structures or superiorframes.

As illustrated in Fig. 11, frame structures or superiorframes for the first and second communications environment are defined as follows. For a given frame definition/specification, in the illustrated example on the basis of the slot numbers s1 and s2 and the frame durations t1 and t2, the numbers f1 and f2 of frames forming a first frame structure of superiorframe and a second frame structure or superiorframe, respectively, are defined such that the minimum values for the superiorframe numbers f1 and f2 fulfill the following equation:

$$f1 \times t1 = f2 \times t2.$$

Then, the duration (f1 x t1) of the first superiorframe and the duration (f2 x t2) of the second superiorframe are the same and define a superiorframe duration Tmin_comm which is indicated in Fig. 11.

If, for example, the first and the second communications environment employ frames having the same duration, i.e. t1 = t2, and the same number of slots per frame, i.e. s1 = s2, so-called 1-superiorframes are obtained, i.e. superiorframes comprising one of the respective frames. As a result, the first superiorframe will comprise one first frame, while the second superiorframe will comprise one second frame.

Comparable to the preceding example, 1-superiorframes can also be obtained in the case frames of the first and second communications environments have the same duration, i.e. t1 = t2, but employ a different number of slots per frame, i.e. s1 ≠ s2.

With respect to a first communications environment being a W-CDMA based environment and the second communications environments being a GSM/GPRS based environment, the following values are used for the above equation:

$$s1 = 15, \; t1 = 10 \; ms \; and \; s2 = 8, \; t2 = 4{,}615 \; ms$$

As a result, the number f1 for the first superiorframe will be 6, while the number f2 for the second superiorframe will be 13. Thus, a so-called 6-superiorframe will be obtained as first superiorframe, i.e. superiorframe comprising 6 W-CDMA frames, while a so-called 13-superiorframe will be obtained as second superiorframe, i.e. a superiorframe comprising 13 TDMA of frames. Both the first and the second superiorframes have a superiorframe duration Tmin_comm of 60 ms.

As indicated by $t_{off}$, a time of set between the first and second superiorframes can be implemented. This will allow for aligning a first one of second frames in the second superiorframe with a first one of first frames of a transmission gap in the first superiorframe. Comparable thereto, such an alignment can also be based on slot basis.

Further issues to be addressed for an implementation are data traffic related control and scheduling tasks. The GSM/GPRS transmission capacity can be selected within certain limits. For example, W-CDMA frame transmission gaps TGs should be positioned such that simultaneous transmissions in both the GSM/GPRS and UMTS communications environments are avoided. Further, the scheduling of GSM/GPRS communications and actual transmissions should be controlled accordingly.

A more detailed description related to synchronization and data traffic related control and scheduling tasks is presented in the following.

Although GSM/GPRS and UMTS communications environments exhibit some differences with respect to their network structure, from a functional point of view, the network structures of these communications environments are similar. For example, the function of a base transceiver station BTS in a GSM/GPRS communications environment essentially corresponds with a node in an UMTS communications environment. The same applies for a base station controller BSC for GSM/GPRS and a radio network controller RNC for UMTS. In principle, such network components of these communications environments serve as units to and from which communications links are established and maintained from and to user equipment like mobile devices (such as mobile telephones). Thus, the term radio base station RBS will be used to designate such network structures and/or components of the different communications environments.

For a synchronization of the frame structures utilized in GSM/GPRS and UMTS communications environments, radio base stations RBSs for these communications environments are synchronized. Here, basically two different scenarios can be considered:

Scenario A:

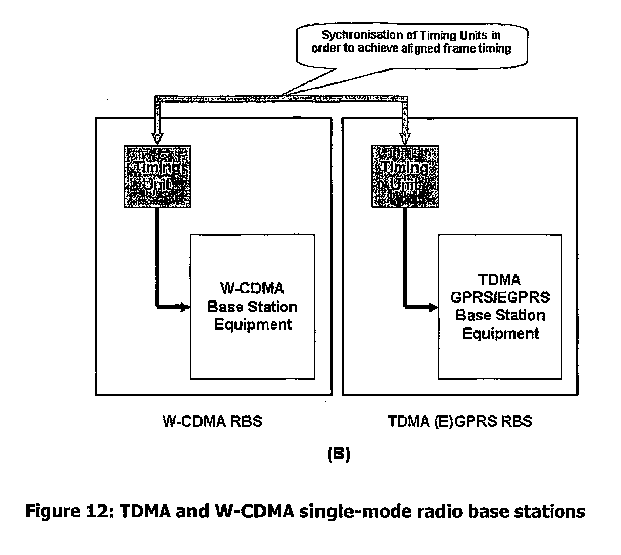

In case of separate radio base stations RBSs respectively used for GSM/GPRS and UMTS, an individual TDMA single-mode radio base station RBS and an individual W-CDMA single-mode radio base station RBS are utilized. These separated radio base stations include TDMA base station equipment and W-CDMA base station equipment, respectively. Further, each single-mode radio base station includes its own timing unit. The TDMA radio base station and the W-CDMA radio base station may thus be synchronized to achieve a common frame timing for example by means of respective timing signals communicated between the radio base stations and, in particular, its timing units. Depending on the preferences defined for the different communications environments, it is possible to operate the timing units of the different radio base stations in a "master/slave" relationship such that always one timing unit is synchronized with respect to the other timing unit. Moreover, it is contemplated to compensate transmission delays for synchronization signals between the different radio base stations. This scenario is illustrated in fig. 12.

Scenario B:

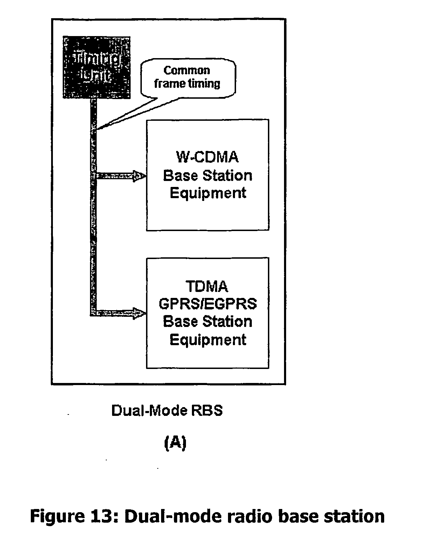

In case of a so-called dual-mode radio base station RBS, a single radio base station is utilized for communications with respect to both GSM/GPRS and UMTS communications environments. As illustrated in fig. 13, such a dual mode radio base station RBS comprises TDMA base station equipment for GSM/GPRS and W-CDMA base station equipment for UMTS. Further, a common timing unit is included which provides for timing and synchronization information to the different base station equipments inside the dual-mode radio base station RBS. As a result, synchronization and, in particular, common frame timing is implicitly achieved.

With respect to data traffic related control and scheduling tasks, GSM/GPRS transmissions should be controlled such that transmission collisions of GSM/GPRS and UMTS transmissions are avoided. This means that for GSM/GPRS transmissions only transmission gaps TGs which are due to the compressed mode of UMTS should be utilized. As set forth above, other types of GSM communications are not executed on data packet basis such that a distribution of other standard GSM communications to different transmission gaps cannot be obtained in general. Therefore, in the following it is assumed that GSM communications being no GSM/GPRS communications are performed in a frequency range outside the frequency range to be shared by GSM/GPRS and UMTS communications.

The resulting demands on control and scheduling can be subdivided in a configuration of transmission gaps TGs in the UMTS communications environment and a scheduling of GSM/GPRS communications in view of a transmission gap configuration.

In line with the above configurations, some control and scheduling functionalities are implemented for the GSM/GPRS and UMTS communications environments. For the GSM/GPRS carriers or TDMA transmissions, respectively, within the shared frequency range, the packet control unit PCU schedules downlink GSM/GPRS transmissions for usable radio blocks only. Further, the packet control unit PCU only assigns usable radio blocks for uplink GSM/GPRS transmissions to for example GSM/GPRS mobile equipment. Moreover, radio base station RBS equipment (see fig. 12 and 13) servicing the GSM/GPRS communications environment does not transmit usable data outside usable radio blocks and packet timing advance control channel PTCCH frames in the shared frequency band.

With respect to the UMTS communications environment, the respective radio base station RBS equipment (see fig. 12 and 13) is configured to utilize the compressed mode for W-CDMA frame transmissions when radio resources are allocated and used within the frequency range shared with GSM/GPRS communications. Also, equipment of the UMTS communications environment is configured to use the compressed mode when such radio resources are allocated and used.

Regarding modifications being expected for GSM/GPRS communications environments in view of UMTS becoming the more important communications environment, the issues considered above can become of minor importance. For example, new communications channel combinations can be used to indicate a mixed communications mode (i.e. shared frequency ranges for both GSM/GPRS and UMPS communications). Further, it is possible to modify the mapping of a packet timing advance control channel PTCCH on the TDMA frame structure, i.e. to change the position of respective frames in the frame structure illustrated in fig. 3 or to use a modified TDMA structure such as shown in fig. 10.

With respect to GSM/GPRS user equipment it is possible to provide information about a mixed communications mode and usable radio blocks of the TDMA frame structure for example by providing additional information at assignment of GSM/GPRS radio resources. Information about a mixed communications mode can be for example broadcasted over a broadcast control channel BCCH for a GSM/GPRS communications environment.

FDD communications via TDD frequencies in an UMTS communications environment

In the following embodiments, the first and second communications standards are defined for a common communications environment. As illustrative example, frequency division duplex (FDD) and time division duplex (TDD) based communications are employed as first and second communications standards, respectively, in an UMTS communications environment as common communications environment. In particular, the following description will be given with respect to HSDPA (High Speed Packet downlink access) in the UMTS communications environment.

In the 3GPP™ specifications, a so-called High Speed Packet Downlink Access (HSDPA) is defined. The goal of HSDPA is to increase the data throughput in a cell or sector, reduce transmission delays and achieve high peek rates.

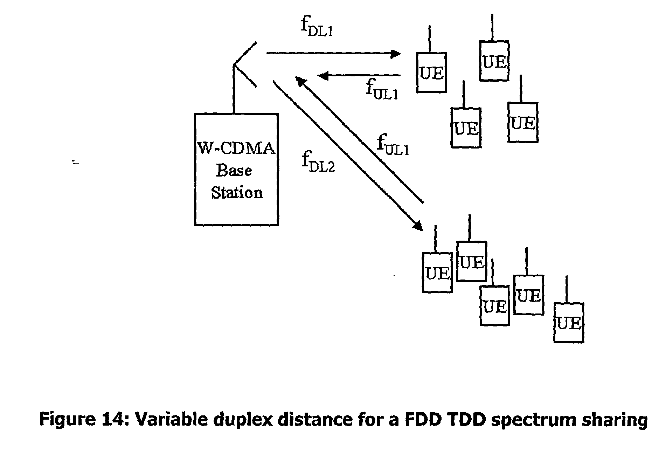

Usually several end user devices such as user equipment UE shown in Fig. 14, share one HSDPA channel. An allocation of this channel to different user equipment UE depends, inter alia, from implemented algorithms, the desired quality of the radio link and the required data through put. An allocation of the HSDPA channel to different user equipment UE is accomplished via time multiplexing.

In particular, communications via a HSDPA channel are performed on the basis of W-CDMA frames each including 15 slots. Moreover, each W-CDMA frame is divided in 5 HS (high speed) sub frames each including 3 slots. Such frame structures are employed both for frequency division duplex (FDD) and time division duplex (TDD) based communications.

As a result of the use of HS subframes, not only a complete W-CDMA frame (15 slots) can be allocated for a radio link to specific user equipment but allows for an allocation of individual HS subframes (3 slots) of a W-CDMA frame to different user equipment.

Since W-CDMA frame structures are comparable for time division duplex (TDD) and frequency division duplex (FDD) communications, it is possible to allocate W-CDMA frames or HS subframes thereof which are originally intended for TDD communications as frames or subframes for FDD communications. Although, the following description is directed to an allocation of TDD (sub) frames for FDD communications, and an allocation of FDD (sub) frames for TDD communications is contemplated in a comparable manner.

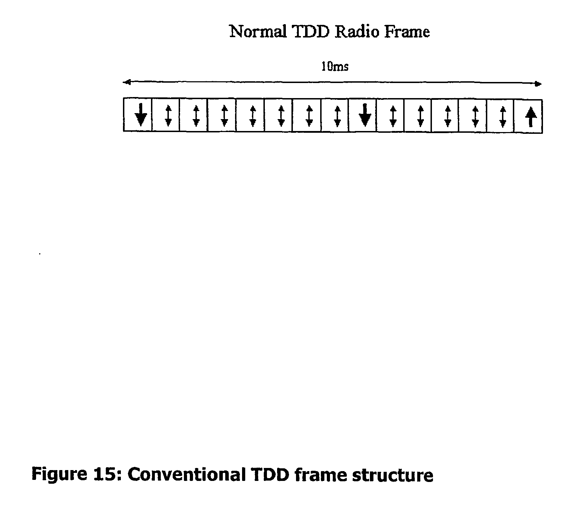

As shown in Fig. 15, a conventional TDD (W-CDMA) frame comprises 15 slots and has an overall length of 10 ms. Further, each TDD (W-CDMA) frame includes at least two slots allocated to TDD downlink and at least one slot allocated to TDD uplink. Thus, the TDD W-CDMA frame could be subdivided into five subframes each including 3 slots. For the example illustrated in Fig. 15, the first slot of the first subframe, the last slot of the third subframe and the last slot of the fifth subframe are used for TDD communications. The orientations of the large arrows in Fig. 15 indicate downlink (arrows directed to the bottom of Fig. 15) and uplink (arrow directed to the top of Fig. 15) communications. Double headed arrows in Fig. 15 indicate slots available for uplink or downlink communications in principle although not utilized for communications in the illustrated example. In line therewith, the second and forth subframes are not utilized for TDD communications and, thus, are available for different communications as will be described below.

For frequency division duplex (FDD) communications, on the basis of full duplex transmissions, two carrier frequency ranges are used, one frequency range for uplink communications and another frequency range for downlink communications. In order to achieve a sufficient separation of uplink and downlink transmissions, according to the 3GPP™ specifications, a duplex distance representing the frequency distance between uplink and downlink frequency ranges is chosen. By means of a variable duplex distance it is possible to change the frequency distance between uplink and downlink frequency ranges for FDD communications on the basis of W-CDMA frames.

Such a variable duplex distance further allows employing further frequency ranges for uplink and/or downlink communications in addition to uplink and downlink frequency ranges originally indented FDD communications (see Fig. 14).

By such a use of a further frequency range for FDD communications, capacity limitations for FDD communications due to uplink and/or downlink constraints can be avoided. For illustrative purposes only, it is assumed that FDD communications are limited by its downlink properties. In order to overcome such a downlink capacity limitation, a further downlink frequency range will provide for the required transmission capacity. As set forth above, frequency ranges originally intended for TDD communications can be used for that purpose during time periods wherein the TDD frequency range is actually not used for TDD communications. With respect to the example illustrated in Fig. 15, the frequency range for the shown TDD W-CDMA frame during the time of the second and forth subframes can be allocated for FDD communications (the use of parts of a TDD frame, i.e. subframes, is, as explained above, possible due to the comparable subdivision of the W-CDMA frames for both TDD and FDD communications).

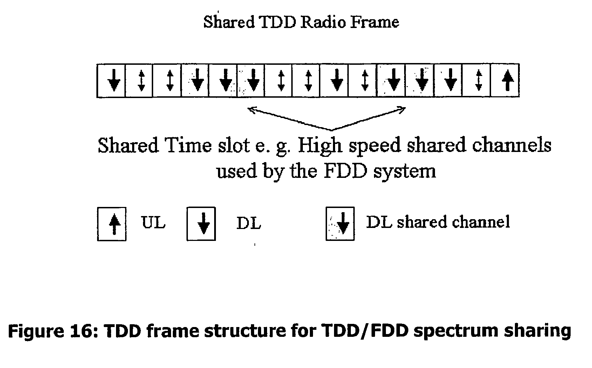

The "shared" TDD W-CDMA frame shown in Fig. 16 illustrates the allocation of the second and forth subframes not utilized for TDD communications for FDD downlink communications in the TDD frequency range.

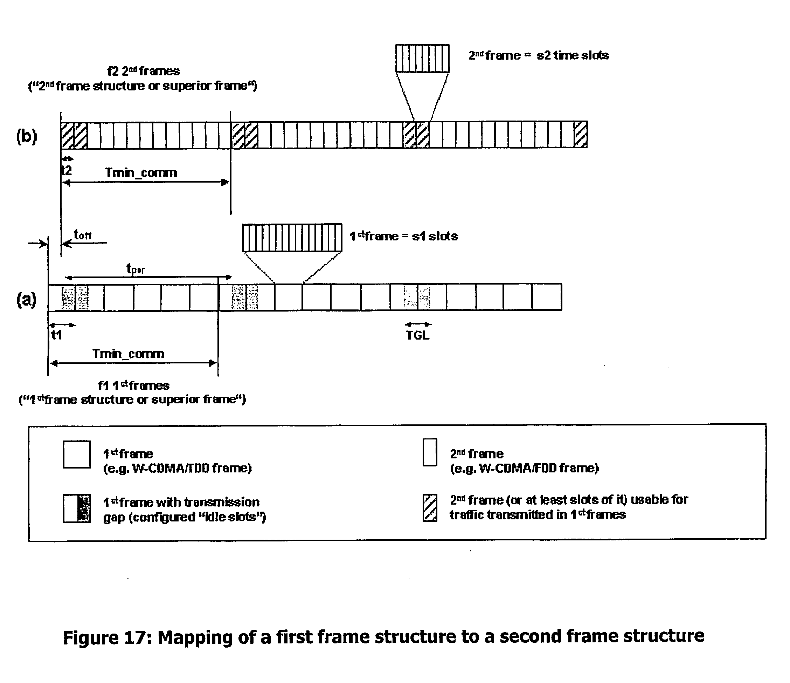

Fig. 17 illustrates, in a general manner, mapping of frame structures of a communications environment to other frame structures of the same communications environment. As illustrated, a communications environment uses first frames each thereof consisting of a number of s1 slots and second frames each thereof comprising a number of s2 slots. As indicated in Fig. 17, a first frame has a duration of t1, while second frames have a duration of t2.

Further, in the communications environment, a number of f1 first frames forms a specific first frame structure referred to as f1-superiorframe with f1 being set to an actual value and a number f2 of second frames forms a specific second frame structure referred to as f2-superiorframe with f2 being set to an actual value.

As set for the above, transmission gaps are defined such that for a period, also referred to as transmission gap length, no transmissions of communications to be performed in the communications environment occur. Those transmissions gaps which are configured on slot basis can be used for transmissions of communications by means of the frames or at least slots thereof of second frame structure.

As indicated by $t_{per}$ transmission gaps or idle periods in the communications environment can be specified within limits determined, for example by a defined maximum transmission gap length and/or a defined minimum number of first frames or slots thereof to be used for transmissions.

To transmit second frames or at least slots thereof, the first and second frame structures are synchronized such that transmissions gaps of the first frame structure occur substantially at the same time second frames or slots thereof to be transmitted in transmission gaps occur or are available. Such synchronization is generally recommended on frame structure or superiorframe basis. If, for example, a second frame structure or superiorframe is defined that match better to more than one second frame structure or superiorframe than to a single one thereof, synchronization can also be performed on the basis of multiples of frame structures or superiorframes.

As illustrated in Fig. 17, frame structures or superiorframes are defined as follows. For a given frame definition/specification, in the illustrated example on the basis of the slot numbers s1 and s2 and the frame durations t1 and t2, the numbers f1 and f2 of frames forming a first frame structure of superiorframe and a second frame structure or superiorframe, respectively, are defined such that the minimum values for the superiorframe numbers f1 and f2 fulfill the following equation:

$$f1 \times t1 = f2 \times t2.$$

Then, the duration (f1 x t1) of the first superiorframe and the duration (f2 x t2) of the second superiorframe are the same and define a superiorframe duration Tmin_comm which is indicated in Fig. 11.

If, for example, the communications environment employ frames having the same duration, i.e. t1 = t2, and the same number of slots per frame, i.e. s1 = s2, so-called 1-superiorframes are obtained, i.e. superiorframes comprising one of the respective frames. As a result, the first superiorframe will comprise one first frame, while the second superiorframe will comprise one second frame.

Comparable to the preceding example, 1-superiorframes can also be obtained in the case frames of the communications environment have the same duration, i.e. t1 = t2, but employ a different number of slots per frame, i.e. s1 ≠ s2.

With respect to a communications environment being a W-CDMA based environment using FDD and TDD frame structures as described above, the following values are used for the above equation:

$$s1 = s2 = 15 \text{ and } t1 = t2 = 10 \text{ ms.}$$

As a result, the number f1 for the first superiorframe will be 6 and the number f2 for the second superiorframe will also be 6. Thus, a so-called 6-superiorframe will be obtained as first superiorframe and second superiorframe, i.e. superiorframes comprising 6 W-CDMA frames.

As indicated by $t_{off}$, a time of set between the first and second superiorframes can be implemented. This will allow for aligning a first one of second frames in the second superiorframe with a first one of first frames of a transmission gap in the first superiorframe. Comparable thereto, such an alignment can also be based on slot basis.

TDD communications via FDD frequencies in an UMTS communications environment

The observations given in the preceding section correspondingly apply to TDD communications of in an UMTS communications environment to be communicated by means of a "shared" FDD W-CDMA frame.

FDD-GSM/(E)GPRS communications via TDD frequencies in an UMTS communications environment

Today's standards define the use of FDD frame structures for GSM/(E)GPRS communications. Therefore, the observations given with respect to FDD communications via TDD frequencies in an UMTS communications environment correspondingly apply to FDD communications of a GSM/(E)GPRS communications environment to be communicated by means of a "shared" TDD W-CDMA frame of an UMTS communications environment.

TDD-GSM/(E)GPRS communications via FDD frequencies in an UMTS communications environment

New GSM/(E)GPRS standards are in discussion wherein it is contemplated to allow TDD frame based communications. Therefore, the observations given with respect to TDD communications via FDD frequencies in an UMTS communications environment correspondingly apply to TDD communications of a GSM/(E)GPRS communications environment to be communicated by means of a "shared" FDD W-CDMA frame of an UMTS communications environment.

Further embodiments

As regards the above implementation of the invention in existing communications environment, it was assumed that the use of one communications environment for communications of another communications environment is performed for the communications interface between end user equipment and base stations, i.e. an air interface. This can require modified end user equipment, e.g., to actually transmit data only during transmission gaps to be used for communications.

In general, the invention can be implemented for any comparable interface of a communications environment, which can be accessed by units of another communications environment. For example, in case of communications environments, which include air interfaces between radio base stations, the use of one communications environment for communications of another communications environment can performed for the communications interface between base stations. Then, modification can be limited to base stations if necessary at all.

The above descriptions refer to the use of unmodified UMTS standards for which communications according to GSM/(E)GPRS standards are adapted and/or in respect of which GSM/(E)GPRS standards are modified. Further, it is contemplated to use unmodified GSM/(E)GPRS standards for which communications according to UMTS standards are adapted and/or in respect of which UMTS standards are modified, e.g. by the defining longer transmission gaps, shorter periods during which actual data communications have to be performed and the like.

The above described mixed communications are not limited to the examples given with respect to GSM/(E)GPRS communications and W-CDMA communications. Rather, mixed communications as described herein are possible for any communications environments such as mobile telephone systems according to the second generation (e.g. GSM including EDGE, IS95, etc.), the third generation (UMTS: W-CDMA, TDD and CDMA2000) und the planned fourth generation (e.g. OFDM based). Further, an implementation is not limited to combinations of specific frequencies.

Beside the today's used GSM frequency bands (900, 1800, 1900 MHz frequency ranges), the following list shows some more exemplary frequency combinations:

GSM 450 Band:

For GSM 450, the system is required to operate in the following band:

- 450,4 MHz to 457,6 MHz: mobile transmit, base receive;
- 460,4 MHz to 467,6 MHz base transmit, mobile receive.

GSM 480 Band:

For GSM 480, the system is required to operate in the following band:

- 478,8 MHz to 486 MHz: mobile transmit, base receive;
- 488,8 MHz to 496 MHz base transmit, mobile receive.

GSM 750 Band:

For GSM 750, the system is required to operate in the following band:

- 747 MHz to 762 MHz: base transmit, mobile receive;
- 777 MHz to 792 MHz: mobile transmit, base receive.

GSM 850 Band:

For GSM 850, the system is required to operate in the following band:

- 824 MHz to 849 MHz: mobile transmit, base receive;
- 869 MHz to 894 MHz: base transmit, mobile receive.

Moreover, several band pairing options for paired and unpaired frequency arrangements for IMT-2000 systems in bands identified by WARC-92 and WRC-2000 are possible. The following table provides a selection of these options and additionally proposes some further opportunities based on VDT as examples for planned frequency combinations:

| | Gap (MHz) | UE Tx (MHz) | Duplex Centre separation (MHz) | BS Tx (MHz) |
| --- | --- | --- | --- | --- |
| Band I | 1920 - 1980 | 130 | 2110 - 2170 | 190 |
| Band II | 1850 - 1910 | 20 | 1930 - 1990 | 80 |
| Band III | 1710 - 1785 | 20 | 1805 - 1880 | 95 |
| (*) | 1710 - 1755 | 50 | 1805 - 1850 | 95 |
| (*) | 1755 - 1805 | 305 | 2110 - 2160 | 355 |
| (*) | 1710 - 1770 | 240 | 2110 - 2170 | 400 |
| (*) | 1920 - 1980 | 520 | 2500 - 2690 | Variable |
| (*) | 1850 - 1910 | 590 | 2500 - 2690 | Variable |
| (*) | 1710 - 1785 | 715 | 2500 - 2690 | Variable |
| (*) | 1710 - 1770 | 730 | 2500 - 2690 | Variable |
| (**) | 2500 (2520) - x | y*20 | z - (2670) 2690 | Variable |
| | x, y and z to are be defined | | | |
| (**) | z - (2670) 2690 | y*20 | 2500 (2520) - x | Variable |
| | x, y and z to are be defined (Reversed duplex direction) | | | |

Combination of Bands (*) and Bands (**) are considered for future communications environments. Further, ITU-R Resolution 225 from the World Radio Communication Conference 2000 (WRC-2000) states that bands 2500 - 2520 MHz and 2670 - 2690 MHz (as identified for IMT-2000 and allocated to the mobile-satellite service (MSS)) may be used for the satellite component of IMT-2000. However, depending on market developments it may be possible in the longer term for bands 2500 - 2520 MHz and 2670 - 2690 MHz to be used by the terrestrial component of IMT-2000.

## Claims

1. A method for operating a first communications environment having a first communications standard and a second communications environment having a second communications standard, wherein communications resources (TG) for communications according to a first communications standard are used for communications according to the second communications standard in a common frequency range, the method comprising the steps of:

   - communicating in the first communications environment by transmitting in the common frequency range a first frame structure, and
- communicating in the second communications environment by transmitting a second frame structure in the common frequency range,
**characterized in that**
- the first frame structure includes at least one transmission gap, and
- at least a part of the second frame structure is transmitted during the at least one transmission gap (TG).

2. The method according to claim 1, wherein the at least one transmission gap is obtained with a transmission time reduction method.

3. The method according to claim 1 or 2, comprising the steps of:

- communicating in the first communications environment by transmitting a plurality of subsequent first frames at least one thereof including the at least one transmission gap and/or
- communicating in the second communications environment by transmitting a plurality of subsequent second frames.

4. The method according to one of the preceding claims, comprising the steps of:

- communicating in the first communications environment by transmitting W—CDMA frames forming the first frame structure, and
- communicating in the second communications environment by transmitting TDMA frames forming the second frame structure.

5. The method of claim 3 or 4, wherein

- each of the first frames includes a number of first slots and the at least one transmission gap is defined on slot basis by a first predefined number of first slots, and/or
- each of the second frames includes a number of second slots.

6. The method of one of the claims 3 to 5, wherein

- the at least one transmission gap includes slots of one of the first frames, and/or
- the at least one transmission gap includes slots of two consecutive ones of the first frames.

7. The method one of the claims 3 to 6, wherein

- during the at least one transmission gap (TG) a second predefined number of the second slots or a second predefined number of the second frames is transmitted.

8. The method according to one of the preceding claims, comprising the step of: synchronizing the communicating in the first and second communications environments such that a frame timing for the first frame structure is synchronized with a frame timing for the second frame structure or vice versa.

9. The method according to one of the preceding claims, comprising the steps of:

- defining the first frame structure such that the at least one transmission gap (TG) has a predefined position therein, and/or
- defining the first frame structure such that the at least one transmission gap (TG) has a predefined length.

10. The method according to one of the preceding claims, wherein only the at least a part of the second frame structure being transmitted during the transmission gap (TG) is used for communicating in the second communications environment.

11. The method according to one of the preceding claims, wherein the time interval between the beginning of one transmission gap (TG) and the beginning of a subsequent transmission gap (TG) corresponds to the time interval between the beginning of a part of the second frame structure to be transmitted during transmission gaps (TG) and the beginning of a subsequent part of the second frame structure to be transmitted during transmission gaps (TG).

**12.** The method according to one of the preceding claims, comprising the steps of:

- transmitting timing information between the first and second communications environments to synchronize communications therein, and/or
- transmitting information to the second communications environment indicating that communicating therein will be performed by transmissions in the common frequency range.

**13.** The method according to one of the preceding claims, wherein

- the first communications environment is an UMTS communications environment, and
- the second communications environment is a GSM/GPRS communications environment.

**14.** A communications environment having a second communications standard comprising

- a first communications environment having a first communications standard,
- a second communications environment having a second communications standard, and
- a common frequency range for communications in the first and second communications environments, wherein the communications environment is adapted to utilize, for communications in the common frequency range, communications resources for communications according to the first communications standard for communications according to the second communications standard,
- the first communications environment comprising at least one first communications unit for transmitting in the common frequency range a first frame structure, and
- the second communications environment comprising at least one second communications unit for transmitting a second frame structure in the common frequency range,
**characterized by**
- the first fame structure including at least one transmission gap (TG), and
- the at least one second communications unit for transmitting the second frame structure in the common frequency range such that at least a part of the second frame structure is transmitted during the at least one transmission gap (TG)

**15.** The communications environment according to claim 14, **characterized by**:

- the at least one first communications unit for at least one of receiving and transmitting the first frame structure via the common frequency range, and/or
- the at least one second communications unit for at least one of receiving and transmitting the at least a part of the second frame structure during the at least one transmission gap via the common frequency range.

**16.** The communications environment according to claim 14 or 15, **characterized by**:

- a common timing unit for the at least one first and second communications units of the first and second communications environments for synchronization of frame structure transmissions thereof, or
- a first timing unit for the at least one first communications unit and a second timing unit for the at least one second communications unit, the first and second timing units being synchronized to synchronize frame structure transmissions.

**17.** The communications environment according to one of the claims 14 to 16,
**characterized by**
the at least one first and second communications units forming an integrated communications unit servicing communications in the first and second communications environment.

**18.** The communications environment according to one of the claims 14 to 17,
**characterized by**:

- at least one first user equipment for communications in the first communications environment by means of the first frame structure, and/or
- at least one second user equipment for communications in the second communications environment at least by means of the at least a part of the second frame structure transmitted during the at least one transmission gap.

19. The communications environment according to one of the claims 14 to 18,
**characterized by**:

- the first communications environment being an UMTS environment, and
- the second communications environment being a GSM/GPRS environment.

20. The communications environment according to one of the claims 14 to 19, being adapted to be operated according to the steps defined in one of the claims 1 to 13.

21. The communications environment according to one of the claims 14 to 20,
**characterized by**
at least one communications unit for communications according to the first and the second communications standard.

22. A user equipment, comprising
means for communicating in a second communications environment having a second communications standard by transmitting a second frame structure in a common frequency range, the common frequency range being shared with a first communications environment having a first communications standard in which a first frame structure including at least one transmission gap is transmitted, the user equipment being **characterised in that** the means for communicating are adapted for transmitting at least a part of the second frame structure during the at least one transmission gap.

23. The user equipment according to claim 22, wherein the user equipment is a mobile telephone.

24. A radio base station, comprising
means for communicating in a second communications environment having a second communications standard by transmitting a second frame structure in a common frequency range, the common frequency range being shared with a first communications environment having a first communications standard in which a first frame structure including at least one transmission gap is transmitted, the radio base station being **characterised in that** the means for communicating are adapted for transmitting at least a part of the second frame structure during the at least one transmission gap.

25. The radio base station according to claim 24, the radio base station further comprising
means for communicating in the first communications environment by transmitting the first frame structure.

26. A computer program product, comprising program code portions for carrying out the steps according to one of the claims 1 to 13.

27. The computer program product according to claim 26, being stored on a computer readable storage medium or in a computer readable storage device.

**Patentansprüche**

1. Verfahren für Operation einer ersten Kommunikationsumgebung, die einen ersten Kommunikationsstandard hat, und einer zweiten Kommunikationsumgebung, die einen zweiten Kommunikationsstandard hat, wobei Kommunikationsressourcen (TG) für Kommunikationen nach einem ersten Kommunikationsstandard für Kommunikationen nach dem zweiten Kommunikationsstandard in einem gemeinsamen Frequenzbereich verwendet werden, das Verfahren die folgenden Schritte umfassend:

- Kommunikation in der ersten Kommunikationsumgebung durch Übertragung einer ersten Rahmenstruktur in dem gemeinsamen Frequenzbereich, und
- Kommunikation in der zweiten Kommunikationsumgebung durch Übertragung einer zweiten Rahmenstruktur in dem gemeinsamen Frequenzbereich,
**dadurch gekennzeichnet, dass**
- die erste Rahmenstruktur mindestens eine Übertragungslücke enthält, und
- mindestens ein Teil der zweiten Rahmenstruktur während der mindestens einen Übertragungslücke (TG) übertragen wird.

2. Verfahren nach Anspruch 1, wobei die mindestens eine Übertragungslücke mit einem Übertragungszeit-Reduktionsverfahren erhalten wird.

3. Verfahren nach Anspruch 1 oder 2, die folgenden Schritte umfassend:

   - Kommunikation in der ersten Kommunikationsumgebung durch Übertragung einer Pluralität von nachfolgenden ersten Rahmen, von denen mindestens einer davon die mindestens eine Übertragungslücke enthält, und/oder
   - Kommunikation in der zweiten Kommunikationsumgebung durch Übertragung einer Pluralität von nachfolgenden zweiten Rahmen.

4. Verfahren nach einem der vorangegangenen Ansprüche, die folgenden Schritte umfassend:

   - Kommunikation in der ersten Kommunikationsumgebung durch Übertragung von W-CDMA-Rahmen, die die erste Rahmenstruktur bilden, und
   - Kommunikation in der zweiten Kommunikationsumgebung durch Übertragung von TDMA-Rahmen, die die zweite Rahmenstruktur bilden.

5. Verfahren von Anspruch 3 oder 4, wobei

   - jeder der ersten Rahmen eine Zahl von ersten Schlitzen enthält und die mindestens eine Übertragungslücke auf Schlitzbasis durch eine erste vordefinierte Zahl von ersten Schlitzen defmiert ist, und/oder
   - jeder der zweiten Rahmen eine Zahl von zweiten Schlitzen enthält.

6. Verfahren von einem der Ansprüche 3 bis 5, wobei

   - die mindestens eine Übertragungslücke Schlitze von einem der ersten Rahmen enthält, und/oder
   - die mindestens eine Übertragungslücke Schlitze von zwei aufeinander folgenden der ersten Rahmen enthält.

7. Verfahren von einem der Ansprüche 3 bis 6, wobei

   - während der mindestens einen Übertragungslücke (TG) eine zweite vordefinierte Zahl der zweiten Schlitze oder eine zweite vordefinierte Zahl der zweiten Rahmen übertragen wird.

8. Verfahren nach einem der vorangegangenen Ansprüche, den folgenden Schritt umfassend:

   Synchronisieren der Kommunikation in den ersten und zweiten Kommunikationsumgebungen derart, dass eine Rahmentaktung für die erste Rahmenstruktur mit einer Rahmentaktung für die zweite Rahmenstruktur oder umgekehrt synchronisiert ist.

9. Verfahren nach einem der vorangegangenen Ansprüche, die folgenden Schritte umfassend:

   - Definieren der ersten Rahmenstruktur derart, dass die mindestens eine Übertragungslücke (TG) darin eine vordefinierte Position hat, und/oder
   - Definieren der ersten Rahmenstruktur derart, dass die mindestens eine Übertragungslücke (TG) eine vordefinierte Länge hat.

10. Verfahren nach einem der vorangegangenen Ansprüche, wobei nur der mindestens eine Teil der zweiten Rahmenstruktur, die während der Übertragungslücke (TG) übertragen wird, für Kommunikation in der zweiten Kommunikationsumgebung verwendet wird.

11. Verfahren nach einem der vorangegangenen Ansprüche, wobei das Zeitintervall zwischen dem Beginn einer Übertragungslücke (TG) und dem Beginn einer nachfolgenden Übertragungslücke (TG) mit dem Zeitintervall zwischen dem Beginn eines Teils der zweiten Rahmenstruktur, die während Übertragungslücken (TG) zu übertragen ist, und dem Beginn eines nachfolgenden Teils der zweiten Rahmenstruktur, die während Übertragungslücken (TG) zu übertragen ist, korrespondiert.

12. Verfahren nach einem der vorangegangenen Ansprüche, die folgenden Schritte umfassend:

- Übertragen von Taktinformationen zwischen den ersten und zweiten Kommunikationsumgebungen zur Synchronisierung der Kommunikationen darin, und/oder
- Übertragen von Informationen zu der zweiten Kommunikationsumgebung, die anzeigen, dass Kommunikation darin durch Übertragungen in dem gemeinsamen Frequenzbereich ausgeführt werden.

13. Verfahren nach einem der vorangegangenen Ansprüche, wobei
die erste Kommunikationsumgebung eine UMTS-Kommunikationsumgebung ist, und

- die zweite Kommunikationsumgebung eines GSM/GPRS-Kommunikationsumgebung ist.

14. Kommunikationsumgebung, die einen zweiten Kommunikationsstandard hat, umfassend

- eine erste Kommunikationsumgebung, die einen ersten Kommunikationsstandard hat,
- eine zweite Kommunikationsumgebung, die einen zweiten Kommunikationsstandard hat, und
- einen gemeinsamen Frequenzbereich für Kommunikationen in den ersten und zweiten Kommunikationsumgebungen,
wobei die Kommunikationsumgebung angepasst ist zur Nutzung, für Kommunikationen in dem gemeinsamen Frequenzbereich, von Kommunikationsressourcen für Kommunikationen nach dem ersten Kommunikationsstandard für Kommunikationen nach dem zweiten Kommunikationsstandard,
- die erste Kommunikationsumgebung mindestens eine erste Kommunikationseinheit für Übertragung einer ersten Rahmenstruktur in dem gemeinsamen Frequenzbereich umfassend, und
- die zweite Kommunikationsumgebung mindestens eine zweite Kommunikationseinheit für Übertragung einer zweiten Rahmenstruktur in dem gemeinsamen Frequenzbereich umfassend,
**gekennzeichnet durch**
- die erste Rahmenstruktur mindestens eine Übertragungslücke (TG) enthaltend, und
- die mindestens eine zweite Kommunikationseinheit zur Übertragung der zweiten Rahmenstruktur in dem gemeinsamen Frequenzbereich derart, dass mindestens ein Teil der zweiten Rahmenstruktur während der mindestens einen Übertragungslücke (TG) übertragen wird.

15. Kommunikationsumgebung nach Anspruch 14, **gekennzeichnet durch**:

- die mindestens eine erste Kommunikationseinheit für mindestens eine von Empfang und Übertragung der ersten Rahmenstruktur über den gemeinsamen Frequenzbereich, und/oder
- die mindestens eine zweite Kommunikationseinheit für mindestens eine von Empfang und Übertragung des mindestens einen Teils der zweiten Rahmenstruktur während der mindestens einen Übertragungslücke über den gemeinsamen Frequenzbereich.

16. Kommunikationsumgebung nach Anspruch 14 oder 15, **gekennzeichnet durch**:

- eine gemeinsame Taktungseinheit für die mindestens eine ersten und zweiten Kommunikationseinheiten der ersten und zweiten Kommunikationsumgebungen für Synchronisierung der Rahmenstruktur-Übertragungen davon, oder
- eine erste Taktungseinheit für die mindestens eine erste Kommunikationseinheit und eine zweite Taktungseinheit für die mindestens eine zweite Kommunikationseinheit, wobei die ersten und zweiten Taktungseinheiten synchronisiert sind, um die Rahmenstruktur-Übertragungen zu synchronisieren.

17. Kommunikationsumgebung nach einem der Ansprüche 14 bis 16, **gekennzeichnet durch**:

die mindestens eine ersten und zweiten Kommunikationseinheiten eine integrierte Kommunikationseinheit bildend, die Kommunikationen in der ersten und zweiten Kommunikationsumgebung abwickelt.

18. Kommunikationsumgebung nach einem der Ansprüche 14 bis 17, **gekennzeichnet durch**:

- mindestens eine erste Benutzerausrüstung für Kommunikationen in der ersten Kommunikationsumgebung mittels der ersten Rahmenstruktur, und/oder
- mindestens eine zweite Benutzerausrüstung für Kommunikationen in der zweiten Kommunikationsumgebung mindestens mittels des mindestens eines Teils der zweiten Rahmenstruktur, die während der mindestens einen Übertragungslücke übertragen wird.

19. Kommunikationsumgebung nach einem der Ansprüche 14 bis 18, **gekennzeichnet durch**:

   - die erste Kommunikationsumgebung eine UMTS-Umgebung seiend, und
   - die zweite Kommunikationsumgebung eine GSM/GPRS-Umgebung seiend.

20. Kommunikationsumgebung nach einem der Ansprüche 14 bis 19,
   angepasst zur Operation gemäß den Schritten, die in einem der Ansprüche 1 bis 13 definiert sind.

21. Kommunikationsumgebung nach einem der Ansprüche 14 bis 20, **gekennzeichnet durch**:

   mindestens eine Kommunikationseinheit für Kommunikation nach dem ersten und dem zweiten Kommunikationsstandard.

22. Benutzerausrüstung, umfassend:

   Mittel für Kommunikation in einer zweiten Kommunikationsumgebung, die einen zweiten Kommunikationsstandard hat, durch Übertragung einer zweiten Rahmenstruktur in einem gemeinsamen Frequenzbereich, wobei der gemeinsame Frequenzbereich geteilt wird mit einer ersten Kommunikationsumgebung, die einen ersten Kommunikationsstandard hat, in der eine erste Rahmenstruktur, die mindestens eine Übertragungslücke enthält, übertragen wird, die Benutzerausrüstung **dadurch gekennzeichnet, dass**
   die Mittel für Kommunikation angepasst sind zur Übertragung von mindestens einem Teil der zweiten Rahmenstruktur während der mindestens einen Übertragungslücke.

23. Benutzerausrüstung nach Anspruch 22, wobei die Benutzerausrüstung ein Mobiltelefon ist.

24. Funkbasisstation, umfassend
   Mittel für Kommunikation in einer zweiten Kommunikationsumgebung, die einen zweiten Kommunikationsstandard hat, durch Übertragung einer zweiten Rahmenstruktur in einem gemeinsamen Frequenzbereich, wobei der gemeinsame Frequenzbereich geteilt wird mit einer ersten Kommunikationsumgebung, die einen ersten Kommunikationsstandard hat, in der eine erste Rahmenstruktur, die mindestens eine Übertragungslücke enthält, übertragen wird, die Funkbasisstation **dadurch gekennzeichnet, dass**
   die Mittel für Kommunikation angepasst sind zur Übertragung von mindestens einem Teil der zweiten Rahmenstruktur während der mindestens einen Übertragungslücke.

25. Funkbasisstation nach Anspruch 24, die Funkbasisstation weiter umfassend
   Mittel für Kommunikation in der ersten Kommunikationsumgebung durch Übertragung der ersten Rahmenstruktur.

26. Computerprogrammprodukt, umfassend Programmcode-Anteile zum Ausführen der Schritte nach einem der Ansprüche 1 bis 13.

27. Computerprogrammprodukt nach Anspruch 26, gespeichert in einem Computer-lesbaren Speichermedium oder in einer Computer-lesbaren Speichervorrichtung.

**Revendications**

1. Procédé pour faire fonctionner un premier environnement de communication comportant un premier standard de communication et un second environnement de communication comportant un second standard de communication, dans lequel des ressources de communication (TG) pour des communications conformément à un premier standard de communication sont utilisées pour des communications conformément au second standard de communication dans une plage de fréquences commune,
   le procédé comprenant les étapes de:

   - communication dans le premier environnement de communication en transmettant dans la plage de fréquences commune une première structure de trames; et
   - communication dans le second environnement de communication en transmettant une seconde structure de trames dans la plage de fréquences commune,
   **caractérisé en ce que**:

- la première structure de trames inclut au moins un espace de transmission; et
- au moins une partie de la seconde structure de trame est transmise pendant l'au moins un espace de transmission (TG).

2. Procédé selon la revendication 1, dans lequel l'au moins un espace de transmission est obtenu à l'aide d'un procédé de réduction de temps de transmission.

3. Procédé selon la revendication 1 ou 2, comprenant les étapes de:

- communication dans le premier environnement de communication en transmettant une pluralité de premières trames qui suivent dont au moins une inclut l'au moins un espace de transmission; et/ou
- communication dans le second environnement de communication en transmettant une pluralité de secondes trames qui suivent.

4. Procédé selon l'une quelconque des revendications précédentes, comprenant les étapes de:

- communication dans le premier environnement de communication en transmettant des trames W-CDMA formant la première structure de trames; et
- communication dans le second environnement de communication en transmettant des trames TDMA formant la seconde structure de trames.

5. Procédé selon la revendication 3 ou 4, dans lequel:

- chacune des premières trames inclut un certain nombre de premières fenêtres et l'au moins un espace de transmission est défini sur une base fenêtre au moyen d'un premier nombre prédéfmi de premières fenêtres; et/ou
- chacune des secondes trames inclut un certain nombre de secondes fenêtres.

6. Procédé selon l'une des revendications 3 à 5, dans lequel:

- l'au moins un espace de transmission inclut des fenêtres de l'une des premières trames; et/ou
- l'au moins un espace de transmission inclut des fenêtres de deux consécutives des premières trames.

7. Procédé selon l'une des revendications 3 à 6, dans lequel:

- pendant l'au moins un espace de transmission (TG), un second nombre prédéfini des secondes fenêtres ou un second nombre prédéfini des secondes trames est transmis.

8. Procédé selon l'une des revendications précédentes, comprenant l'étape de:

synchronisation de la communication dans les premier et second environnements de communication de telle sorte qu'un cadencement de trame pour la première structure de trames soit synchronisé avec un cadencement de trame pour la seconde structure de trames ou vice versa.

9. Procédé selon l'une des revendications précédentes, comprenant les étapes de:

- définition de la première structure de trames de telle sorte que l'au moins un espace de transmission (TG) présente une position prédéfinie dedans; et/ou
- définition de la première structure de trames de telle sorte que l'au moins un espace de transmission (TG) présente une longueur prédéfmie.

10. Procédé selon l'une des revendications précédentes, dans lequel seulement l'au moins une partie de la seconde structure de trames qui est transmise pendant l'espace de transmission (TG) est utilisée pour communiquer dans le second environnement de transmission.

11. Procédé selon l'une des revendications précédentes, dans lequel l'intervalle temporel entre le début d'un espace de transmission (TG) et le début d'un espace de transmission suivant (TG) correspond à l'intervalle temporel entre le début d'une partie de la seconde structure de trames à transmettre pendant des espaces de transmissions (TG) et le début d'une partie suivante de la seconde structure de trames à transmettre pendant des espaces de transmission (TG).

12. Procédé selon l'une des revendications précédentes, comprenant les étapes de:

- transmission d'une information de cadencement entre les premier et second environnements de communication pour synchroniser des communications dedans; et/ou
- transmission d'une information au second environnement de communication, indiquant qu'une communication dedans sera réalisée au moyen de transmissions dans la plage de fréquences commune.

13. Procédé selon l'une des revendications précédentes, dans lequel:

- le premier environnement de communication est un environnement de communication UMTS; et
- le second environnement de communication est un environnement de communication GSM/GPRS.

14. Environnement de communication comportant un second standard de communication comprenant:

- un premier environnement de communication présentant un premier standard de communication;
- un second environnement de communication présentant un second standard de communication; et
- une plage de fréquences commune pour des communications dans les premier et second environnements de communication,
dans lequel l'environnement de communication est adapté pour utiliser, pour des communications dans la plage de fréquences commune, des ressources de communication pour des communications conformément au premier standard de communication et pour des communications conformément au second standard de communication,
- le premier environnement de communication comprenant au moins une première unité de communication pour transmettre dans la plage de fréquences commune une première structure de trames et
- le second environnement de communication comprenant au moins une seconde unité de communication pour transmettre une seconde structure de trames dans la plage de fréquences commune,
**caractérisé en ce que**:
- la première structure de trames inclut au moins un espace de transmission (TG); et
- l'au moins une seconde unité de communication transmet la seconde structure de trames dans la plage de fréquences commune de telle sorte qu'au moins une partie de la seconde structure de trames soit transmise pendant l'au moins un espace de transmission (TG).

15. Environnement de communication selon la revendication 14, **caractérisé par**:

- l'au moins une première unité de communication pour au moins une action prise parmi une réception et une émission de la première structure de trames via la plage de fréquences commune et/ou
- l'au moins une seconde unité de communication pour au moins une action prise parmi la réception et l'émission de l'au moins une partie de la seconde structure de trames pendant l'au moins un espace de transmission via la plage de fréquences commune.

16. Environnement de communication selon la revendication 14 ou 15, **caractérisé par**:

- une unité de cadencement commune pour les au moins unes des première et seconde unités de communication des premier et second environnements de communication pour une synchronisation de leurs transmissions de structures de trames; ou
- une première unité de cadencement pour l'au moins une première unité de communication et une seconde unité de cadencement pour l'au moins une seconde unité de communication, les première et seconde unités de cadencement étant synchronisées afm de synchroniser des transmissions de structures de trames.

17. Environnement de communication selon l'une des revendications 14 à 16, **caractérisé en ce que**
les au moins unes première et seconde unités de communication forment une unité de communication intégrée qui dessert des communications dans les premier et second environnements de communication.

18. Environnement de communication selon l'une des revendications 14 à 17, **caractérisé par**:

- au moins un premier équipement d'utilisateur pour des communications dans le premier environnement de communication au moyen de la première structure de trames; et/ou
- au moins un second équipement d'utilisateur pour des communications dans le second environnement de communication au moins au moyen de l'au moins une partie de la seconde structure de trames qui est transmise pendant l'au moins un espace de transmission.

19. Environnement de communication selon l'une des revendications 14 à 18, **caractérisé en ce que**:

    - le premier environnement de communication est un environnement UMTS; et
    - le second environnement de communication est un environnement GSM/GPRS.

20. Environnement de communication selon l'une des revendications 14 à 19, qui est adapté pour fonctionner conformément aux étapes qui sont définies dans l'une des revendications 1 à 13.

21. Environnement de communication selon l'une des revendications 14 à 20, **caractérisé par** au moins une unité de communication pour communiquer conformément aux premier et second standards de communication.

22. Equipement d'utilisateur comprenant:

    un moyen pour communiquer dans un second environnement de communication présentant un second standard de communication en transmettant une seconde structure de trames dans une plage de fréquences commune, la plage de fréquences commune étant partagée avec un premier environnement de communication présentant un premier standard de communication où une première structure de trames incluant au moins un espace de transmission est transmise, l'équipement d'utilisateur étant **caractérisé en ce que**
    le moyen pour communiquer est adapté pour transmettre au moins une partie de la seconde structure de trames pendant l'au moins un espace de transmission.

23. Equipement d'utilisateur selon la revendication 22, dans lequel l'équipement d'utilisateur est un téléphone mobile.

24. Station de base radio comprenant:

    un moyen pour communiquer dans un second environnement de communication présentant un second standard de communication en transmettant une seconde structure de trames dans une plage de fréquences commune, la plage de fréquences commune étant partagée avec un premier environnement de communication présentant un premier standard de communication où une première structure de trames incluant au moins un espace de transmission est transmise, la station de base radio étant **caractérisée en ce que**
    le moyen pour communiquer est adapté pour transmettre au moins une partie de la seconde structure de trames pendant l'au moins un espace de transmission.

25. Station de base radio selon la revendication 24, la station de base radio comprenant en outre:

    un moyen pour communiquer dans le premier environnement de communication en transmettant la première structure de trames.

26. Produit de programme d'ordinateur comprenant des parties de code de programme pour mettre en oeuvre les étapes selon l'une des revendications 1 à 13.

27. Produit de programme d'ordinateur selon la revendication 26, qui est stocké sur un support de stockage lisible par ordinateur ou dans un dispositif de stockage lisible par ordinateur.

DPDCH

| Data
$N_{data}$ bits |
|---|

$T_{slot}$ = 2560 chips, $N_{data}$ = 10*$2^k$ bits (k=0..6)

DPCCH

| Pilot
$N_{pilot}$ bits | TFCI
$N_{TFCI}$ bits | FBI
$N_{FBI}$ bits | TPC
$N_{TPC}$ bits |
|---|---|---|---|

$T_{slot}$ = 2560 chips, 10 bits

| Slot #0 | Slot #1 | | Slot #i | | Slot #14 |
|---|---|---|---|---|---|

1 radio frame: $T_f$ = 10 ms

## Figure 1: Frame structure for uplink DPDCH/DPCCH

| DPDCH | DPCCH | | DPDCH | DPCCH |
|---|---|---|---|---|
| Data1
$N_{data1}$ bits | TPC
$N_{TPC}$ bits | TFCI
$N_{TFCI}$ bits | Data2
$N_{data2}$ bits | Pilot
$N_{pilot}$ bits |

$T_{slot}$ = 2560 chips, 10*$2^k$ bits (k=0..7)

| Slot #0 | Slot #1 | | Slot #i | | Slot #14 |
|---|---|---|---|---|---|

One radio frame, $T_f$ = 10 ms

## Figure 2: Frame structure for downlink DPCH

52 TDMA Frames

| B0 | B1 | B2 | T | B3 | B4 | B5 | X | B6 | B7 | B8 | T | B9 | B10 | B11 | X |

X = Idle frame
T = Frame used for PTCCH
B0 - B11 = Radio blocks

## Figure 3: Multiframe structure for PDCH

One frame
(10 ms)        Transmission gap available for
               inter-frequency measurements

## Figure 4: Compressed mode transmission

Slot # (N$_{first}$ − 1)　　　transmission gap　　　Slot # (N$_{last}$ + 1)

| Data |
|------|

• • • • • •

| Data |
|------|

| Pilot | TFCI | FBI | TPC |
|-------|------|-----|-----|

• • • • • •

| Pilot | TFCI | FBI | TPC |
|-------|------|-----|-----|

**Figure 5: Frame structure in uplink compressed transmission**

Slot # (N$_{first}$ - 1)　　　transmission gap　　　Slot # (N$_{last}$ + 1)

| Data1 | TPC | TFCI | Data2 | PL |
|-------|-----|------|-------|-----|

• • • • • •

| PL | Data1 | TPC | TFCI | Data2 | PL |
|----|-------|-----|------|-------|-----|

**(a) Frame structure type A**

Slot # (N$_{first}$ - 1)　　　transmission gap　　　Slot # (N$_{last}$ + 1)

| Data1 | TPC | TFCI | Data2 | PL |
|-------|-----|------|-------|-----|

| TPC | • • • • |
|-----|--------|

| PL | Data1 | TPC | TFCI | Data2 | PL |
|----|-------|-----|------|-------|-----|

**(b) Frame structure type B**

**Figure 6: Frame structure types in downlink compressed transmission**

Figure 7: Transmission gap positioning

Transmission gap

Transmission gap

Transmission gap

Radio frame

(1) Single-frame method

First radio frame    Transmission gap    Second radio frame

Transmission gap

Transmission gap

Radio frame

(2) Double-frame method

**Figure 8: Transmission gap positions**

W-CDMA frame

W-CDMA with transmission gap

TDMA frame usable for GPRS/EGRPS traffic

TDMA frame = 8 time slots

4.615ms

240ms
52 TDMA frames

W-CDMA frame = 15 slots

$t_{off}$

$t_{par}$

10ms

TGL

120ms
12 W-CDMA frames

120ms
12 W-CDMA frames

**Figure 9: Mapping of TDMA and W-CDMA frames**

52 TDMA frames

Ba  Bb  Bc  Bd

| Ba,Bb | Bursts belonging to radio block B0' |
| Bc,Bd | Bursts belonging to radio block B1' |
| X | Idle frame |

**Figure 10: Modified TDMA frame structure**

**Figure 11: Mapping of a first frame structure to a second frame structure**

f2 2nd communications environment frames ("2nd communications environment frame structure or superior frame")

2nd communications environment frame = s2 slots

(b)

Tmin_comm

t2

f1 1st communications environment frames ("1st communications environment frame structure or superior frame")

1st communications environment frame = s1 slots

(a)

Tmin_comm

TGL

tor

t1

Legend:

☐ 1st communications environment frame (e.g. W-CDMA frame)

▨ 1st communications environment frame with transmission gap (configured "idle slots")

☐ 2nd communications environment frame (e.g. GSM/GPRS frame)

▨ 2nd communications environment frame (or at least slots of it) usable for traffic transmitted in 1st communications environment

Figure 12: TDMA and W-CDMA single-mode radio base stations

Dual-Mode RBS

(A)

**Figure 13: Dual-mode radio base station**

**Figure 14: Variable duplex distance for a FDD TDD spectrum sharing**

Normal TDD Radio Frame

10ms

**Figure 15: Conventional TDD frame structure**

Shared TDD Radio Frame

Shared Time slot e. g. High speed shared channels
used by the FDD system

↑ UL    ↓ DL    ↓ DL shared channel

**Figure 16: TDD frame structure for TDD/FDD spectrum sharing**

Figure 17: Mapping of a first frame structure to a second frame structure